# EUROPEAN PATENT APPLICATION

(11) **EP 4 757 262 A2**
(43) Date of publication of application: **10.06.2026**
(21) Application number: 25224237.5
(22) Date of filing: 27.04.2020
(51) Int. Cl.: H04L 27/26

(54) **COMMUNICATION METHOD AND DEVICE**

(30) Priority: 30.04.2019 CN 201910365273
(62) Divisional of application: 20798167.1
(71) Applicant: Huawei Technologies Co., Ltd., Shenzhen, Guangdong 518129 (CN)
(72) Inventor: HAN, Jing, SHENZHEN, 518129 (CN); ZHANG, Hongli, SHENZHEN, 518129 (CN); ZHANG, Fuqiang, SHENZHEN, 518129 (CN); DAI, Xizeng, SHENZHEN, 518129 (CN)
(74) Representative: Roth, Sebastian

(57) **Abstract**

This application relates to a communication method and device. The communication method includes: determining, by a terminal device, whether the terminal device supports sending and/or receiving of a signal other than a first reference signal in a measurement process; and receiving, by the terminal device, only the first reference signal within a first time domain range when the terminal device does not support sending and/or receiving of the signal other than the first reference signal in the measurement process, where the first time domain range includes a first time domain symbol and a second time domain symbol, the first time domain symbol is a time domain symbol configured by a network device, and the second time domain symbol includes N time domain symbols before the first time domain symbol and/or N time domain symbols after the first time domain symbol. Both the terminal device and the network device can determine a scheduling limitation generated when the terminal device performs measurement, so that the terminal device may neither receive the signal other than the first reference signal nor send any signal on a time domain symbol having the scheduling limitation, to reduce interference, caused by measurement, to sending and/or receiving of another signal.

## Description

### CROSS-REFERENCE TO RELATED APPLICATIONS

This application claims priority to Chinese Patent Application No. 201910365273.9, filed with the China National Intellectual Property Administration on April 30, 2019 and entitled "COMMUNICATION METHOD AND DEVICE", which is incorporated herein by reference in its entirety.

### TECHNICAL FIELD

This application relates to the field of communication technologies, and in particular, to a communication method and device.

### BACKGROUND

Cross link interference (cross link interference, CLI) measurement on a terminal device side is introduced to release (Rel)-16 new radio (new radio, NR) work item (work item, WI) remote interference mitigation (remote interference mitigation, RIM)/CLI, and is mainly used to evaluate an interference level, during use of a dynamic uplink-downlink configuration, of uplink transmission of a terminal device in a neighboring cell to receiving downlink data of a serving cell by a terminal device in the serving cell. The CLI measurement may include two types of measurement: sounding reference signal (sounding reference signal, SRS)-reference signal received power (reference signal received power, RSRP) measurement and CLI-received signal strength indicator (received signal strength indicator, RSSI) measurement. The SRS-RSRP measurement means measuring an RSRP of an SRS from the terminal device in the neighboring cell, and the CLI-RSSI measurement means measuring an RSSI from a specified time-frequency resource. According to a conclusion of a RAN 1, timing of the CLI measurement is determined by implementation of a terminal device.

Currently, technical specification (technical specification, TS) 38.133 defines, for radio resource management (radio resource management, RRM) measurement, scheduling limitations caused by mixed subcarrier spacings and receiving beam sweeping. The mixed subcarrier spacings mean that a subcarrier spacing of a synchronization signal and physical broadcast channel block (synchronization signal and physical broadcast channel block, SSB) is different from a subcarrier spacing of data. When the terminal device does not support receiving of two different subcarrier spacings simultaneously, a scheduling limitation is generated. The receiving beam sweeping causes a scheduling limitation because a receiving beam used by the terminal device during measurement is different from a receiving beam used by the terminal device when receiving data of a serving cell. Therefore, the terminal device cannot perform data transmission with the serving cell during measurement. The scheduling limitation means that the terminal device may receive no data on a specified symbol.

The current RRM measurement is based on downlink timing of the terminal device, but the CLI measurement is based on timing determined by the terminal device, where the timing determined by the terminal device usually has an advance relative to the downlink timing of the terminal device. Therefore, the scheduling limitations of the existing RRM measurement cannot be applicable to the CLI measurement, and symbols on which the scheduling limitations are generated when the terminal device performs CLI measurement are currently unclear yet.

### SUMMARY

Embodiments of this application provide a communication method and device, to specify a scheduling limitation generated when a terminal device performs CLI measurement.

According to a first aspect, a first communication method is provided. The method includes: determining, by a terminal device, whether the terminal device supports sending and/or receiving of a signal other than a first reference signal in a measurement process, where the first reference signal is used by the terminal device to perform measurement in the measurement process; and receiving, by the terminal device, only the first reference signal within a first time domain range when the terminal device does not support sending and/or receiving of the signal other than the first reference signal in the measurement process, where the first time domain range includes a first time domain symbol and a second time domain symbol, the first time domain symbol is a time domain symbol configured by a network device, the second time domain symbol includes N time domain symbols before the first time domain symbol and/or N time domain symbols after the first time domain symbol, and N is a positive integer.

The method may be performed by a first communication apparatus. The first communication apparatus may be a communication device or a communication apparatus, for example, a chip system, that can support a function required by the communication device to implement the method. For example, the communication device is the terminal device.

In this embodiment of this application, the terminal device may determine whether the terminal device supports sending and/or receiving of the signal other than the first reference signal in the measurement process. If the terminal device determines that the terminal device does not support sending and/or receiving of the signal other than the first reference signal in the measurement process, the terminal device may receive only the first reference signal within the first time domain range. Receiving only the first reference signal within the first time domain range may be understood as that, within the first time domain range, the terminal device receives only the first reference signal, and neither receives the signal other than the first reference signal nor sends any signal. Similarly, within the first time domain range, the network device may also send only the first reference signal to the terminal device, or certainly may not send the first reference signal to the terminal device, but neither sends the signal other than the first reference signal to the terminal device nor receives any signal from the terminal device. In other words, if measurement performed by the terminal device on the first reference signal affects signal sending and/or receiving, both the terminal device and the network device can determine a scheduling limitation generated when the terminal device performs measurement, so that the terminal device may neither receive the signal other than the first reference signal nor send any signal on a time domain symbol having the scheduling limitation, to avoid interference, caused by measurement, to sending and/or receiving of another signal as much as possible.

With reference to the first aspect, in a possible implementation of the first aspect, a value of N is a predefined value; the value of N is determined based on a subcarrier spacing of a serving cell of the terminal device; the value of N is determined based on a frequency range to which a frequency of the serving cell of the terminal device belongs; the value of N is determined based on a timing advance of the terminal device in the serving cell; or the value of N is determined based on a largest value in timing advances used when the terminal device measures the first reference signal.

There are a plurality of possible manners of determining the value of N. Selection of a specific manner may be configured by the network device, specified by using a protocol, or the like, and is relatively flexible.

With reference to the first aspect, in a possible implementation of the first aspect, the method further includes: receiving, by the terminal device, a first message from the network device, where the first message is used to indicate a value of N.

The value of N may be determined by the network device, and the network device may notify the terminal device after determining the value. In this way, the terminal device is not required to determine the value of N again, so that the value of N is consistent for the terminal device and the network device, and a workload of the terminal device is reduced.

With reference to the first aspect, in a possible implementation of the first aspect, the method further includes: sending, by the terminal device, a second message to the network device, where the second message is used to indicate the value of N.

The value of N may alternatively be determined by the terminal device, and the terminal device may notify the network device after determining the value. In this way, the network device is not required to determine the value of N again, so that the value of N is consistent for the terminal device and the network device, and a workload of the network device is reduced.

With reference to the first aspect, in a possible implementation of the first aspect, the method further includes: sending, by the terminal device, a second message to the network device, where the second message is used to indicate the largest value in the timing advances used when the terminal device measures the first reference signal.

Alternatively, the terminal device may not be required to send a specific value of N to the network device, but only indicate, to the network device, the largest value in the timing advances used when the terminal device measures the first reference signal. The network device may determine the value of N based on the largest value in the timing advances used when the terminal device measures the first reference signal.

With reference to the first aspect, in a possible implementation of the first aspect, the method further includes: when the terminal device determines that the terminal device supports sending and/or receiving of the signal other than the first reference signal in the measurement process, and the terminal device determines not to use a beam sweeping manner in the measurement process, receiving, by the terminal device within the first time domain range, the first reference signal, and sending and/or receiving a first signal, where the first signal is a signal other than the first reference signal.

If the terminal device determines not to use the beam sweeping manner when measuring the first reference signal, a receiving beam used by the terminal device during measurement may be the same as a receiving beam used by the terminal device when receiving downlink data of a serving cell. Therefore, if the terminal device determines that the terminal device supports sending and/or receiving of the signal other than the first reference signal in the measurement process, within the first time domain range, the terminal device may not only receive the first reference signal, but also receive the signal other than the first reference signal, and can also send any signal. Within the first time domain range, the network device may also not only send the first reference signal, but also receive any signal from the terminal device, and can also send the signal other than the first reference signal to the terminal device. Because the measurement process does not affect a sending and/or receiving process of another signal, or has relatively slight impact on the sending and/or receiving process of the another signal, the measurement process and the sending and/or receiving process of the another signal can be performed synchronously, to improve communication efficiency.

With reference to the first aspect, in a possible implementation of the first aspect, the method further includes: receiving, by the terminal device, only the first reference signal within the first time domain range when the terminal device determines that the terminal device supports sending and/or receiving of the signal other than the first reference signal in the measurement process, and the terminal device determines to use a beam sweeping manner in the measurement process.

If the terminal device determines not to use the beam sweeping manner when measuring the first reference signal, a receiving beam used by the terminal device during measurement may be different from a receiving beam used by the terminal device when receiving downlink data of a serving cell. Therefore, in the measurement process, the terminal device cannot receive a downlink signal from the serving cell. Therefore, even if the terminal device determines that the terminal device supports sending and/or receiving of the signal other than the first reference signal in the measurement process, the terminal device may receive only the first reference signal within the first time domain range. It may be understood as that, within the first time domain range, the terminal device receives only the first reference signal, and neither receives the signal other than the first reference signal nor sends any signal. Similarly, within the first time domain range, the network device may also send only the first reference signal to the terminal device, or certainly may not send the first reference signal to the terminal device, but neither sends the signal other than the first reference signal to the terminal device nor receives any signal from the terminal device. In this manner, interference, caused by measurement, to sending and/or receiving of another signals is avoided as much as possible.

With reference to the first aspect, in a possible implementation of the first aspect, the method further includes: sending, by the terminal device, capability information of the terminal device to the network device, where the capability information is used to indicate whether the terminal device supports sending and/or receiving of the signal other than the first reference signal in the measurement process.

The terminal device may send the capability information of the terminal device to the network device, so that the network device may determine, based on the capability information of the terminal device, whether the terminal device supports sending and/or receiving of the signal other than the first reference signal in the measurement process. Certainly, the network device may alternatively determine, based on another factor, whether the terminal device supports sending and/or receiving of the signal other than the first reference signal in the measurement process. This is not specifically limited.

According to a second aspect, a second communication method is provided. The method includes: determining, by a network device, whether a terminal device supports sending and/or receiving of a signal other than a first reference signal in a measurement process, where the first reference signal is used by the terminal device to perform measurement in the measurement process; and skipping, by the network device, sending the signal other than the first reference signal to the terminal device within a first time domain range when determining that the terminal device does not support sending and/or receiving of the signal other than the first reference signal in the measurement process, where the first time domain range includes a first time domain symbol and a second time domain symbol, the first time domain symbol is a time domain symbol configured by the network device, the second time domain symbol includes N time domain symbols before the first time domain symbol and/or N time domain symbols after the first time domain symbol, and N is a positive integer.

The method may be performed by a second communication apparatus. The second communication apparatus may be a communication device or a communication apparatus, for example, a chip system, that can support a function required by the communication device to implement the method. For example, the communication device is the network device.

With reference to the second aspect, in a possible implementation of the second aspect, a value of N is a predefined value; the value of N is determined based on a subcarrier spacing of a serving cell of the terminal device; the value of N is determined based on a frequency range to which a frequency of the serving cell of the terminal device belongs; the value of N is determined based on a timing advance of the terminal device in the serving cell of the terminal device; or the value of N is determined based on a largest value in timing advances used when the terminal device measures the first reference signal.

With reference to the second aspect, in a possible implementation of the second aspect, the method further includes: receiving, by the network device, a second message from the terminal device, where the second message is used to indicate the value of N.

With reference to the second aspect, in a possible implementation of the second aspect, the method further includes: sending, by the network device, a first message to the terminal device, where the first message is used to indicate the value of N.

With reference to the second aspect, in a possible implementation of the second aspect, the method further includes: sending, by the network device, the first message to the terminal device, where the first message is used to indicate the largest value in the timing advances used when the terminal device measures the first reference signal.

With reference to the second aspect, in a possible implementation of the second aspect, the method further includes: when the network device determines that the terminal device supports sending and/or receiving of the signal other than the first reference signal in the measurement process, and the network device determines that the terminal device does not use a beam sweeping manner in the measurement process, sending, by the network device within the first time domain range, the first reference signal to the terminal device, and receiving and/or sending a first signal to the terminal device, where the first signal is a signal other than the first reference signal.

With reference to the second aspect, in a possible implementation of the second aspect, the method further includes: sending, by the network device, only the first reference signal within the first time domain range when the network device determines that the terminal device supports sending and/or receiving of the signal other than the first reference signal in the measurement process, and the network device determines that the terminal device uses a beam sweeping manner in the measurement process.

With reference to the second aspect, in a possible implementation of the second aspect, the determining, by a network device, whether a terminal device supports sending and/or receiving of a signal other than a first reference signal in a measurement process includes: receiving, by the network device, capability information of the terminal device from the terminal device; and determining, by the network device based on the capability information, whether the terminal device supports sending and/or receiving of the signal other than the first reference signal in the measurement process.

For technical effects of the second aspect or the possible implementations of the second aspect, refer to the description of the technical effects of the first aspect or the corresponding implementations of the first aspect.

According to a third aspect, a third communication method is provided. The method includes: receiving, by a terminal device, measurement configuration information from a network device, where the measurement configuration information is used to indicate the terminal device to measure a plurality of first reference signals; and measuring, by the terminal device, the plurality of first reference signals based on the measurement configuration information when the terminal device determines that a smallest value in differences between a plurality of cyclic shifts corresponding to the plurality of first reference signals is greater than or equal to M, where the plurality of first reference signals are first reference signals located on a same time domain symbol and corresponding to a same comb.

The method may be performed by a third communication apparatus. The third communication apparatus may be a communication device or a communication apparatus, for example, a chip system, that can support a function required by the communication device to implement the method. For example, the communication device is the terminal device.

If the smallest value in the differences between the cyclic shifts is not limited, the terminal device can perform detection only in a worst case, that is, a detection window corresponding to each cyclic shift is time resolution (a minimum of 1/48 of a time domain symbol) of a single cyclic shift. Consequently, the terminal device may omit detecting or falsely detect the first reference signals, resulting in lower measurement accuracy. However, according to the method provided in this embodiment of this application, a minimum distance between the cyclic shifts of the plurality of first reference signals on the same time domain symbol and on the same comb is defined, and the terminal device may correspondingly adjust, during detection, a size of the detection window corresponding to the cyclic shift, so that the measured first reference signals can fall into corresponding detection windows as much as possible, to improve measurement accuracy.

With reference to the third aspect, in a possible implementation of the third aspect, a value of M is a predefined value; the value of M is determined based on a maximum timing error that can be processed by the terminal device; the value of M is determined based on a frequency range to which a frequency of a serving cell of the terminal device belongs; or the value of M is determined based on a subcarrier spacing of the serving cell of the terminal device.

Alternatively, the value of M may be determined by the terminal device, and the terminal device may notify the network device after determining the value. In this way, the network device is not required to determine the value of M again, so that the value of M is consistent for the terminal device and the network device, and a workload of the network device is reduced.

With reference to the third aspect, in a possible implementation of the third aspect, the method further includes: receiving, by the terminal device, a first message from the network device, where the first message is used to indicate a value of M.

The terminal device may determine the value of M in one of the foregoing several manners, or the value of M may be determined by the network device. After determining the value, the network device may send the value of M to the terminal device, so that the terminal device is not required to determine the value of M.

According to a fourth aspect, a fourth communication method is provided. The method includes: determining, by a network device, measurement configuration information, where the measurement configuration information is used to indicate a terminal device to measure a plurality of first reference signals, a smallest value in differences between a plurality of cyclic shifts corresponding to the plurality of first reference signals configured by the network device is greater than or equal to M, and the plurality of first reference signals are first reference signals located on a same time domain symbol and corresponding to a same comb; and sending, by the network device, the measurement configuration information to the terminal device.

The method may be performed by a fourth communication apparatus. The fourth communication apparatus may be a communication device or a communication apparatus, for example, a chip system, that can support a function required by the communication device to implement the method. For example, the communication device is the network device.

With reference to the fourth aspect, in a possible implementation of the fourth aspect, a value of M is a predefined value; the value of M is determined based on a maximum timing error that can be processed by the terminal device; the value of M is determined based on a frequency range to which a frequency of a serving cell of the terminal device belongs; or the value of M is determined based on a subcarrier spacing of the serving cell of the terminal device.

With reference to the fourth aspect, in a possible implementation of the fourth aspect, the method further includes: sending, by the network device, a first message to the terminal device, where the first message is used to indicate a value of M.

For technical effects of the fourth aspect or the possible implementations of the fourth aspect, refer to the description of the technical effects of the third aspect or the corresponding implementations of the third aspect.

According to a fifth aspect, a fifth communication method is provided. The method includes: receiving, by a terminal device, measurement configuration information from a network device, where the measurement configuration information is used to indicate the terminal device to measure a plurality of first reference signals; determining, by the terminal device, that a case in which at least two of the plurality of first reference signals are located on a same time domain symbol and correspond to a same comb does not exist; and measuring, by the terminal device, the plurality of first reference signals based on the measurement configuration information.

The method may be performed by a fifth communication apparatus. The fifth communication apparatus may be a communication device or a communication apparatus, for example, a chip system, that can support a function required by the communication device to implement the method. For example, the communication device is the terminal device.

According to the method provided in this embodiment of this application, a case in which two of the plurality of first reference signals configured by the network device are located on a same time domain symbol and correspond to a same comb does not exist. This is equivalent to fundamentally resolving a problem of falsely detecting or omitting detecting the reference signals by the terminal device, and helps improve measurement accuracy of the terminal device.

With reference to the fifth aspect, in a possible implementation of the fifth aspect, the measurement configuration information is further used to indicate the terminal device to measure a plurality of second reference signals, where the plurality of second reference signals are located on a same time domain symbol and correspond to a same comb.

If the measurement configuration information further indicates the terminal device to measure the plurality of second reference signals, and the plurality of second reference signals are located on the same time domain symbol and correspond to the same comb, the terminal device may not measure the plurality of second reference signals, to avoid a problem such as false detection or omitting detection that may be generated in a measurement process.

According to a sixth aspect, a sixth communication method is provided. The method includes: determining, by a network device, measurement configuration information, where the measurement configuration information is used to indicate a terminal device to measure a plurality of first reference signals, and a case in which at least two of the plurality of first reference signals indicated by the measurement configuration information are located on a same time domain symbol and correspond to a same comb does not exist; and sending, by the network device, the measurement configuration information to the terminal device.

The method may be performed by a sixth communication apparatus. The sixth communication apparatus may be a communication device or a communication apparatus, for example, a chip system, that can support a function required by the communication device to implement the method. For example, the communication device is the network device.

With reference to the sixth aspect, in a possible implementation of the sixth aspect, the measurement configuration information is further used to indicate the terminal device to measure a plurality of second reference signals, where the plurality of second reference signals are located on a same time domain symbol and correspond to a same comb.

For technical effects of the sixth aspect or the possible implementations of the sixth aspect, refer to the description of the technical effects of the fifth aspect or the corresponding implementations of the fifth aspect.

According to a seventh aspect, a first type of communication apparatus is provided. For example, the communication apparatus is the first communication apparatus described above. The communication apparatus is configured to perform the method according to any one of the first aspect or the possible implementations of the first aspect. Specifically, the communication apparatus may include modules configured to perform the method according to any one of the first aspect or the possible implementations of the first aspect. For example, the communication apparatus includes a processing module and a transceiver module. For example, the communication apparatus is a terminal device. The processing module is configured to determine whether the communication apparatus supports sending and/or receiving of a signal other than a first reference signal in a measurement process, where the first reference signal is used by the communication apparatus to perform measurement in the measurement process. The transceiver module is configured to receive only the first reference signal within a first time domain range when the processing module determines that the communication apparatus does not support sending and/or receiving of the signal other than the first reference signal in the measurement process, where the first time domain range includes a first time domain symbol and a second time domain symbol, the first time domain symbol is a time domain symbol configured by a network device, the second time domain symbol includes N time domain symbols before the first time domain symbol and/or N time domain symbols after the first time domain symbol, and N is a positive integer.

With reference to the seventh aspect, in a possible implementation of the seventh aspect, a value of N is a predefined value; the value of N is determined based on a subcarrier spacing of a serving cell of the communication apparatus; the value of N is determined based on a frequency range to which a frequency of the serving cell of the communication apparatus belongs; the value of N is determined based on a timing advance of the communication apparatus in the serving cell; or the value of N is determined based on a largest value in timing advances used when the communication apparatus measures the first reference signal.

With reference to the seventh aspect, in a possible implementation of the seventh aspect, the transceiver module is further configured to receive a first message from the network device, where the first message is used to indicate a value of N.

With reference to the seventh aspect, in a possible implementation of the seventh aspect, the transceiver module is further configured to send a second message to the network device, where the second message is used to indicate the value of N.

With reference to the seventh aspect, in a possible implementation of the seventh aspect, the transceiver module is further configured to send a second message to the network device, where the second message is used to indicate the largest value in the timing advances used when the terminal device measures the first reference signal.

With reference to the seventh aspect, in a possible implementation of the seventh aspect, the transceiver module is further configured to: when the processing module determines that the communication apparatus supports sending and/or receiving of the signal other than the first reference signal in the measurement process, and the processing module determines not to use a beam sweeping manner in the measurement process, receive, within the first time domain range, the first reference signal, and sending and/or receiving a first signal, where the first signal is a signal other than the first reference signal.

With reference to the seventh aspect, in a possible implementation of the seventh aspect, the transceiver module is further configured to receive only the first reference signal within the first time domain range when the processing module determines that the communication apparatus supports sending and/or receiving of the signal other than the first reference signal in the measurement process, and the processing module determines to use a beam sweeping manner in the measurement process.

With reference to the seventh aspect, in a possible implementation of the seventh aspect, the transceiver module is further configured to send capability information of the communication apparatus to the network device, where the capability information is used to indicate whether the communication apparatus supports sending and/or receiving of the signal other than the first reference signal in the measurement process.

For technical effects of the seventh aspect or the possible implementations of the seventh aspect, refer to the description of the technical effects of the first aspect or the corresponding implementations of the first aspect.

According to an eighth aspect, a second type of communication apparatus is provided. For example, the communication apparatus is the second communication apparatus described above. The communication apparatus is configured to perform the method according to any one of the second aspect or the possible implementations of the second aspect. Specifically, the communication apparatus may include modules configured to perform the method according to any one of the second aspect or the possible implementations of the second aspect. For example, the communication apparatus includes a processing module and a transceiver module. For example, the communication apparatus is a network device. The processing module is configured to determine whether a terminal device supports sending and/or receiving of a signal other than a first reference signal in a measurement process, where the first reference signal is used by the terminal device to perform measurement in the measurement process. The transceiver module is configured to skip sending the signal other than the first reference signal to the terminal device within a first time domain range when the processing module determines that the terminal device does not support sending and/or receiving of the signal other than the first reference signal in the measurement process, where the first time domain range includes a first time domain symbol and a second time domain symbol, the first time domain symbol is a time domain symbol configured by the communication apparatus, the second time domain symbol includes N time domain symbols before the first time domain symbol and/or N time domain symbols after the first time domain symbol, and N is a positive integer.

With reference to the eighth aspect, in a possible implementation of the eighth aspect, a value of N is a predefined value; the value of N is determined based on a subcarrier spacing of a serving cell of the terminal device; the value of N is determined based on a frequency range to which a frequency of the serving cell of the terminal device belongs; the value of N is determined based on a timing advance of the terminal device in the serving cell of the terminal device; or the value of N is determined based on a largest value in timing advances used when the terminal device measures the first reference signal.

With reference to the eighth aspect, in a possible implementation of the eighth aspect, the transceiver module is further configured to receive a second message from the terminal device, where the second message is used to indicate the value of N.

With reference to the eighth aspect, in a possible implementation of the eighth aspect, the transceiver module is further configured to send a first message to the terminal device, where the first message is used to indicate the value of N.

With reference to the eighth aspect, in a possible implementation of the eighth aspect, the transceiver module is further configured to send the first message to the terminal device, where the first message is used to indicate the largest value in the timing advances used when the terminal device measures the first reference signal.

With reference to the eighth aspect, in a possible implementation of the eighth aspect, the transceiver module is further configured to: when the processing module determines that the terminal device supports sending and/or receiving of the signal other than the first reference signal in the measurement process, and the processing module determines that the terminal device does not use a beam sweeping manner in the measurement process, send, within the first time domain range, the first reference signal to the terminal device, and receiving and/or sending a first signal to the terminal device, where the first signal is a signal other than the first reference signal.

With reference to the eighth aspect, in a possible implementation of the eighth aspect, the transceiver module is further configured to send only the first reference signal within the first time domain range when the processing module determines that the terminal device supports sending and/or receiving of the signal other than the first reference signal in the measurement process, and the processing module determines that the terminal device uses a beam sweeping manner in the measurement process.

With reference to the eighth aspect, in a possible implementation of the eighth aspect, the processing module is configured to determine, in the following manner, whether the terminal device supports sending and/or receiving of the signal other than the first reference signal in the measurement process: obtaining capability information of the terminal device received by the transceiver module from the terminal device; and determining, based on the capability information, whether the terminal device supports sending and/or receiving of the signal other than the first reference signal in the measurement process.

For technical effects of the eighth aspect or the possible implementations of the eighth aspect, refer to the description of the technical effects of the second aspect or the corresponding implementations of the second aspect.

According to a ninth aspect, a third type of communication apparatus is provided. For example, the communication apparatus is the third communication apparatus described above. The communication apparatus is configured to perform the method according to any one of the third aspect or the possible implementations of the third aspect. Specifically, the communication apparatus may include modules configured to perform the method according to any one of the third aspect or the possible implementations of the third aspect. For example, the communication apparatus includes a processing module and a transceiver module. For example, the communication apparatus is a terminal device. The transceiver module is configured to receive measurement configuration information from a network device, where the measurement configuration information is used to indicate the communication apparatus to measure a plurality of first reference signals.

The processing module is configured to measure the plurality of first reference signals based on the measurement configuration information when determining that a smallest value in differences between a plurality of cyclic shifts corresponding to the plurality of first reference signals is greater than or equal to M, where the plurality of first reference signals are first reference signals located on a same time domain symbol and corresponding to a same comb.

With reference to the ninth aspect, in a possible implementation of the ninth aspect, a value of M is a predefined value; the value of M is determined based on a maximum timing error that can be processed by the communication apparatus; the value of M is determined based on a frequency range to which a frequency of a serving cell of the communication apparatus belongs; or the value of M is determined based on a subcarrier spacing of the serving cell of the communication apparatus.

With reference to the ninth aspect, in a possible implementation of the ninth aspect, the transceiver module is further configured to receive a first message from the network device, where the first message is used to indicate a value of M.

For technical effects of the ninth aspect or the possible implementations of the ninth aspect, refer to the description of the technical effects of the third aspect or the corresponding implementations of the third aspect.

According to a tenth aspect, a fourth type of communication apparatus is provided. For example, the communication apparatus is the fourth communication apparatus described above. The communication apparatus is configured to perform the method according to any one of the fourth aspect or the possible implementations of the fourth aspect. Specifically, the communication apparatus may include modules configured to perform the method according to any one of the fourth aspect or the possible implementations of the fourth aspect. For example, the communication apparatus includes a processing module and a transceiver module. For example, the communication apparatus is a network device. The processing module is configured to determine measurement configuration information, where the measurement configuration information is used to indicate a terminal device to measure a plurality of first reference signals, a smallest value in differences between a plurality of cyclic shifts corresponding to the plurality of first reference signals configured by the communication apparatus is greater than or equal to M, and the plurality of first reference signals are first reference signals located on a same time domain symbol and corresponding to a same comb. The transceiver module is configured to send the measurement configuration information to the terminal device.

With reference to the tenth aspect, in a possible implementation of the tenth aspect, a value of M is a predefined value; the value of M is determined based on a maximum timing error that can be processed by the terminal device; the value of M is determined based on a frequency range to which a frequency of a serving cell of the terminal device belongs; or the value of M is determined based on a subcarrier spacing of the serving cell of the terminal device.

With reference to the tenth aspect, in a possible implementation of the tenth aspect, the transceiver module is further configured to send a first message to the terminal device, where the first message is used to indicate a value of M.

For technical effects of the tenth aspect or the possible implementations of the tenth aspect, refer to the description of the technical effects of the fourth aspect or the corresponding implementations of the fourth aspect.

According to an eleventh aspect, a fifth type of communication apparatus is provided. For example, the communication apparatus is the fifth communication apparatus described above. The communication apparatus is configured to perform the method according to any one of the fifth aspect or the possible implementations of the fifth aspect. Specifically, the communication apparatus may include modules configured to perform the method according to any one of the fifth aspect or the possible implementations of the fifth aspect. For example, the communication apparatus includes a processing module and a transceiver module. For example, the communication apparatus is a terminal device. The transceiver module is configured to receive measurement configuration information from a network device, where the measurement configuration information is used to indicate the communication apparatus to measure a plurality of first reference signals. The processing module is configured to determine that a case in which at least two of the plurality of first reference signals are located on a same time domain symbol and correspond to a same comb does not exist. The processing module is further configured to measure the plurality of first reference signals based on the measurement configuration information.

With reference to the eleventh aspect, in a possible implementation of the eleventh aspect, the measurement configuration information is further used to indicate the communication apparatus to measure a plurality of second reference signals, where the plurality of second reference signals are located on a same time domain symbol and correspond to a same comb.

For technical effects of the eleventh aspect or the possible implementations of the eleventh aspect, refer to the description of the technical effects of the fifth aspect or the corresponding implementations of the fifth aspect.

According to a twelfth aspect, a sixth type of communication apparatus is provided. For example, the communication apparatus is the sixth communication apparatus described above. The communication apparatus is configured to perform the method according to any one of the sixth aspect or the possible implementations of the sixth aspect. Specifically, the communication apparatus may include modules configured to perform the method according to any one of the sixth aspect or the possible implementations of the sixth aspect. For example, the communication apparatus includes a processing module and a transceiver module. For example, the communication apparatus is a network device. The processing module is configured to determine measurement configuration information, where the measurement configuration information is used to indicate a terminal device to measure a plurality of first reference signals, and a case in which at least two of the plurality of first reference signals indicated by the measurement configuration information are located on a same time domain symbol and correspond to a same comb does not exist. The transceiver module is configured to send the measurement configuration information to the terminal device.

With reference to the twelfth aspect, in a possible implementation of the twelfth aspect, the measurement configuration information is further used to indicate the terminal device to measure a plurality of second reference signals, where the plurality of second reference signals are located on a same time domain symbol and correspond to a same comb.

For technical effects of the twelfth aspect or the possible implementations of the twelfth aspect, refer to the description of the technical effects of the sixth aspect or the corresponding implementations of the sixth aspect.

According to a thirteenth aspect, a seventh type of communication apparatus is provided. For example, the communication apparatus is the first communication apparatus described above. The communication apparatus includes a processor and a transceiver. The processor and the transceiver are coupled to each other, and are configured to implement the method described in the first aspect or the possible designs of the first aspect. For example, the communication apparatus is a chip disposed in a communication device. For example, the communication device is a terminal device. For example, the transceiver is implemented by using an antenna, a feeder, and a codec in the communication device. Alternatively, if the communication apparatus is the chip disposed in the communication device, the transceiver is, for example, a communication interface in the chip. The communication interface is connected to a radio frequency transceiver component in the communication device, to send and/or receive information through the radio frequency transceiver component. The processor is configured to determine whether the communication apparatus supports sending and/or receiving of a signal other than a first reference signal in a measurement process, where the first reference signal is used by the communication apparatus to perform measurement in the measurement process. The transceiver is configured to receive only the first reference signal within a first time domain range when the processing module determines that the communication apparatus does not support sending and/or receiving of the signal other than the first reference signal in the measurement process, where the first time domain range includes a first time domain symbol and a second time domain symbol, the first time domain symbol is a time domain symbol configured by a network device, the second time domain symbol includes N time domain symbols before the first time domain symbol and/or N time domain symbols after the first time domain symbol, and N is a positive integer.

With reference to the thirteenth aspect, in a possible implementation of the thirteenth aspect, a value of N is a predefined value; the value of N is determined based on a subcarrier spacing of a serving cell of the communication apparatus; the value of N is determined based on a frequency range to which a frequency of the serving cell of the communication apparatus belongs; the value of N is determined based on a timing advance of the communication apparatus in the serving cell; or the value of N is determined based on a largest value in timing advances used when the communication apparatus measures the first reference signal.

With reference to the thirteenth aspect, in a possible implementation of the thirteenth aspect, the transceiver is further configured to receive a first message from the network device, where the first message is used to indicate a value of N.

With reference to the thirteenth aspect, in a possible implementation of the thirteenth aspect, the transceiver is further configured to send a second message to the network device, where the second message is used to indicate the value of N.

With reference to the thirteenth aspect, in a possible implementation of the thirteenth aspect, the transceiver is further configured to send a second message to the network device, where the second message is used to indicate the largest value in the timing advances used when the terminal device measures the first reference signal.

With reference to the thirteenth aspect, in a possible implementation of the thirteenth aspect, the transceiver is further configured to: when the processor determines that the communication apparatus supports sending and/or receiving of the signal other than the first reference signal in the measurement process, and the processor determines not to use a beam sweeping manner in the measurement process, receive, within the first time domain range, the first reference signal, and sending and/or receiving a first signal, where the first signal is a signal other than the first reference signal.

With reference to the thirteenth aspect, in a possible implementation of the thirteenth aspect, the transceiver is further configured to receive only the first reference signal within the first time domain range when the processor determines that the communication apparatus supports sending and/or receiving of the signal other than the first reference signal in the measurement process, and the processor determines to use a beam sweeping manner in the measurement process.

With reference to the thirteenth aspect, in a possible implementation of the thirteenth aspect, the transceiver is further configured to send capability information of the communication apparatus to the network device, where the capability information is used to indicate whether the communication apparatus supports sending and/or receiving of the signal other than the first reference signal in the measurement process.

For technical effects of the thirteenth aspect or the possible implementations of the thirteenth aspect, refer to the description of the technical effects of the first aspect or the corresponding implementations of the first aspect.

According to a fourteenth aspect, an eighth type of communication apparatus is provided. For example, the communication apparatus is the second communication apparatus described above. The communication apparatus includes a processor and a transceiver. The processor and the transceiver are coupled to each other, and are configured to implement the method described in the second aspect or the possible designs of the second aspect. For example, the communication apparatus is a chip disposed in a communication device. For example, the communication device is a network device. For example, the transceiver is implemented by using an antenna, a feeder, and a codec in the communication device. Alternatively, if the communication apparatus is the chip disposed in the communication device, the transceiver is, for example, a communication interface in the chip. The communication interface is connected to a radio frequency transceiver component in the communication device, to send and/or receive information through the radio frequency transceiver component. The processor is configured to determine whether a terminal device supports sending and/or receiving of a signal other than a first reference signal in a measurement process, where the first reference signal is used by the terminal device to perform measurement in the measurement process. The transceiver is configured to skip sending the signal other than the first reference signal to the terminal device within a first time domain range when the processing module determines that the terminal device does not support sending and/or receiving of the signal other than the first reference signal in the measurement process, where the first time domain range includes a first time domain symbol and a second time domain symbol, the first time domain symbol is a time domain symbol configured by the communication device, the second time domain symbol includes N time domain symbols before the first time domain symbol and/or N time domain symbols after the first time domain symbol, and N is a positive integer.

With reference to the fourteenth aspect, in a possible implementation of the fourteenth aspect, a value of N is a predefined value; the value of N is determined based on a subcarrier spacing of a serving cell of the terminal device; the value of N is determined based on a frequency range to which a frequency of the serving cell of the terminal device belongs; the value of N is determined based on a timing advance of the terminal device in the serving cell of the terminal device; or the value of N is determined based on a largest value in timing advances used when the terminal device measures the first reference signal.

With reference to the fourteenth aspect, in a possible implementation of the fourteenth aspect, the transceiver is further configured to receive a second message from the terminal device, where the second message is used to indicate the value of N.

With reference to the fourteenth aspect, in a possible implementation of the fourteenth aspect, the transceiver is further configured to send a first message to the terminal device, where the first message is used to indicate the value of N.

With reference to the fourteenth aspect, in a possible implementation of the fourteenth aspect, the transceiver is further configured to send the first message to the terminal device, where the first message is used to indicate the largest value in the timing advances used when the terminal device measures the first reference signal.

With reference to the fourteenth aspect, in a possible implementation of the fourteenth aspect, the transceiver is further configured to: when the processor determines that the terminal device supports sending and/or receiving of the signal other than the first reference signal in the measurement process, and the processor determines that the terminal device does not use a beam sweeping manner in the measurement process, send, within the first time domain range, the first reference signal to the terminal device, and receiving and/or sending a first signal to the terminal device, where the first signal is a signal other than the first reference signal.

With reference to the fourteenth aspect, in a possible implementation of the fourteenth aspect, the transceiver is further configured to send only the first reference signal within the first time domain range when the processor determines that the terminal device supports sending and/or receiving of the signal other than the first reference signal in the measurement process, and the processor determines that the terminal device uses a beam sweeping manner in the measurement process.

With reference to the fourteenth aspect, in a possible implementation of the fourteenth aspect, the processor is configured to determine, in the following manner, whether the terminal device supports sending and/or receiving of the signal other than the first reference signal in the measurement process: obtaining capability information of the terminal device received by the transceiver module from the terminal device; and determining, based on the capability information, whether the terminal device supports sending and/or receiving of the signal other than the first reference signal in the measurement process.

For technical effects of the fourteenth aspect or the possible implementations of the fourteenth aspect, refer to the description of the technical effects of the second aspect or the corresponding implementations of the second aspect.

According to a fifteenth aspect, a ninth type of communication apparatus is provided. For example, the communication apparatus is the third communication apparatus described above. The communication apparatus includes a processor and a transceiver. The processor and the transceiver are coupled to each other, and are configured to implement the method described in the third aspect or the possible designs of the third aspect. For example, the communication apparatus is a chip disposed in a communication device. For example, the communication device is a terminal device. For example, the transceiver is implemented by using an antenna, a feeder, and a codec in the communication device. Alternatively, if the communication apparatus is the chip disposed in the communication device, the transceiver is, for example, a communication interface in the chip. The communication interface is connected to a radio frequency transceiver component in the communication device, to send and/or receive information through the radio frequency transceiver component. The transceiver is configured to receive measurement configuration information from a network device, where the measurement configuration information is used to indicate the communication apparatus to measure a plurality of first reference signals. The processor is configured to measure the plurality of first reference signals based on the measurement configuration information when determining that a smallest value in differences between a plurality of cyclic shifts corresponding to the plurality of first reference signals is greater than or equal to M, where the plurality of first reference signals are first reference signals located on a same time domain symbol and corresponding to a same comb.

With reference to the fifteenth aspect, in a possible implementation of the fifteenth aspect, a value of M is a predefined value; the value of M is determined based on a maximum timing error that can be processed by the communication apparatus; the value of M is determined based on a frequency range to which a frequency of a serving cell of the communication apparatus belongs; or the value of M is determined based on a subcarrier spacing of the serving cell of the communication apparatus.

With reference to the fifteenth aspect, in a possible implementation of the fifteenth aspect, the transceiver is further configured to receive a first message from the network device, where the first message is used to indicate a value of M.

For technical effects of the fifteenth aspect or the possible implementations of the fifteenth aspect, refer to the description of the technical effects of the third aspect or the corresponding implementations of the third aspect.

According to a sixteenth aspect, a tenth type of communication apparatus is provided. For example, the communication apparatus is the fourth communication apparatus described above. The communication apparatus includes a processor and a transceiver. The processor and the transceiver are coupled to each other, and are configured to implement the method described in the fourth aspect or the possible designs of the fourth aspect. For example, the communication apparatus is a chip disposed in a communication device. For example, the communication device is a network device. For example, the transceiver is implemented by using an antenna, a feeder, and a codec in the communication device. Alternatively, if the communication apparatus is the chip disposed in the communication device, the transceiver is, for example, a communication interface in the chip. The communication interface is connected to a radio frequency transceiver component in the communication device, to send and/or receive information through the radio frequency transceiver component. The processor is configured to determine measurement configuration information, where the measurement configuration information is used to indicate a terminal device to measure a plurality of first reference signals, a smallest value in differences between a plurality of cyclic shifts corresponding to the plurality of first reference signals configured by the communication apparatus is greater than or equal to M, and the plurality of first reference signals are first reference signals located on a same time domain symbol and corresponding to a same comb.

The transceiver is configured to send the measurement configuration information to the terminal device.

With reference to the sixteenth aspect, in a possible implementation of the sixteenth aspect, a value of M is a predefined value; the value of M is determined based on a maximum timing error that can be processed by the terminal device; the value of M is determined based on a frequency range to which a frequency of a serving cell of the terminal device belongs; or the value of M is determined based on a subcarrier spacing of the serving cell of the terminal device.

With reference to the sixteenth aspect, in a possible implementation of the sixteenth aspect, the transceiver is further configured to send a first message to the terminal device, where the first message is used to indicate a value of M.

For technical effects of the sixteenth aspect or the possible implementations of the sixteenth aspect, refer to the description of the technical effects of the fourth aspect or the corresponding implementations of the fourth aspect.

According to a seventeenth aspect, an eleventh type of communication apparatus is provided. For example, the communication apparatus is the fifth communication apparatus described above. The communication apparatus includes a processor and a transceiver. The processor and the transceiver are coupled to each other, and are configured to implement the method described in the fifth aspect or the possible designs of the fifth aspect. For example, the communication apparatus is a chip disposed in a communication device. For example, the communication device is a terminal device. For example, the transceiver is implemented by using an antenna, a feeder, and a codec in the communication device. Alternatively, if the communication apparatus is the chip disposed in the communication device, the transceiver is, for example, a communication interface in the chip. The communication interface is connected to a radio frequency transceiver component in the communication device, to send and/or receive information through the radio frequency transceiver component. The transceiver is configured to receive measurement configuration information from a network device, where the measurement configuration information is used to indicate the communication apparatus to measure a plurality of first reference signals. The processor is configured to determine that a case in which at least two of the plurality of first reference signals are located on a same time domain symbol and correspond to a same comb does not exist. The processor is further configured to measure the plurality of first reference signals based on the measurement configuration information.

With reference to the seventeenth aspect, in a possible implementation of the seventeenth aspect, the measurement configuration information is further used to indicate the communication apparatus to measure a plurality of second reference signals, where the plurality of second reference signals are located on a same time domain symbol and correspond to a same comb.

For technical effects of the seventeenth aspect or the possible implementations of the seventeenth aspect, refer to the description of the technical effects of the fifth aspect or the corresponding implementations of the fifth aspect.

According to an eighteenth aspect, a twelfth type of communication apparatus is provided. For example, the communication apparatus is the sixth communication apparatus described above. The communication apparatus includes a processor and a transceiver. The processor and the transceiver are coupled to each other, and are configured to implement the method described in the sixth aspect or the possible designs of the sixth aspect. For example, the communication apparatus is a chip disposed in a communication device. For example, the communication device is a network device. For example, the transceiver is implemented by using an antenna, a feeder, and a codec in the communication device. Alternatively, if the communication apparatus is the chip disposed in the communication device, the transceiver is, for example, a communication interface in the chip. The communication interface is connected to a radio frequency transceiver component in the communication device, to send and/or receive information through the radio frequency transceiver component. The processor is configured to determine measurement configuration information, where the measurement configuration information is used to indicate a terminal device to measure a plurality of first reference signals, and a case in which at least two of the plurality of first reference signals indicated by the measurement configuration information are located on a same time domain symbol and correspond to a same comb does not exist. The transceiver is configured to send the measurement configuration information to the terminal device.

With reference to the eighteenth aspect, in a possible implementation of the eighteenth aspect, the measurement configuration information is further used to indicate the terminal device to measure a plurality of second reference signals, where the plurality of second reference signals are located on a same time domain symbol and correspond to a same comb.

For technical effects of the eighteenth aspect or the possible implementations of the eighteenth aspect, refer to the description of the technical effects of the sixth aspect or the corresponding implementations of the sixth aspect.

According to a nineteenth aspect, a thirteenth type of communication apparatus is provided. The communication apparatus may be the first communication apparatus in the foregoing method designs. For example, the communication apparatus is a chip disposed in a terminal device. The communication apparatus includes: a memory, configured to store computer executable program code; and a processor, where the processor is coupled to the memory. The program code stored in the memory includes instructions. When the processor executes the instructions, the thirteenth type of communication apparatus is enabled to perform the method according to any one of the first aspect or the possible implementations of the first aspect.

The thirteenth type of communication apparatus may further include a communication interface. The communication interface may be a transceiver in the terminal device, for example, implemented by using an antenna, a feeder, and a codec in the communication apparatus. Alternatively, if the thirteenth type of communication apparatus is the chip disposed in the terminal device, the communication interface may be an input/output interface in the chip, for example, an input/output pin.

According to a twentieth aspect, a fourteenth type of communication apparatus is provided. The communication apparatus may be the second communication apparatus in the foregoing method designs. For example, the communication apparatus is a chip disposed in a network device. The communication apparatus includes: a memory, configured to store computer executable program code; and a processor, where the processor is coupled to the memory. The program code stored in the memory includes instructions. When the processor executes the instructions, the fourteenth type of communication apparatus is enabled to perform the method according to any one of the second aspect or the possible implementations of the second aspect.

The fourteenth type of communication apparatus may further include a communication interface. The communication interface may be a transceiver in the network device, for example, implemented by using an antenna, a feeder, and a codec in the communication apparatus. Alternatively, if the fourteenth type of communication apparatus is the chip disposed in the network device, the communication interface may be an input/output interface in the chip, for example, an input/output pin.

According to a twenty-first aspect, a fifteenth type of communication apparatus is provided. The communication apparatus may be the third communication apparatus in the foregoing method designs. For example, the communication apparatus is a chip disposed in a network device. The communication apparatus includes: a memory, configured to store computer executable program code; and a processor, where the processor is coupled to the memory. The program code stored in the memory includes instructions. When the processor executes the instructions, the fifteenth type of communication apparatus is enabled to perform the method according to any one of the third aspect or the possible implementations of the third aspect.

The fifteenth type of communication apparatus may further include a communication interface. The communication interface may be a transceiver in the network device, for example, implemented by using an antenna, a feeder, and a codec in the communication apparatus. Alternatively, if the fifteenth type of communication apparatus is the chip disposed in the network device, the communication interface may be an input/output interface in the chip, for example, an input/output pin.

According to a twenty-second aspect, a sixteenth type of communication apparatus is provided. The communication apparatus may be the fourth communication apparatus in the foregoing method designs. For example, the communication apparatus is a chip disposed in a terminal device. The communication apparatus includes: a memory, configured to store computer executable program code; and a processor, where the processor is coupled to the memory. The program code stored in the memory includes instructions. When the processor executes the instructions, the sixteenth type of communication apparatus is enabled to perform the method according to any one of the fourth aspect or the possible implementations of the fourth aspect.

The sixteenth type of communication apparatus may further include a communication interface. The communication interface may be a transceiver in the terminal device, for example, implemented by using an antenna, a feeder, and a codec in the communication apparatus. Alternatively, if the sixteenth type of communication apparatus is the chip disposed in the terminal device, the communication interface may be an input/output interface in the chip, for example, an input/output pin.

According to a twenty-third aspect, a seventeenth type of communication apparatus is provided. The communication apparatus may be the fifth communication apparatus in the foregoing method designs. For example, the communication apparatus is a chip disposed in a network device. The communication apparatus includes: a memory, configured to store computer executable program code; and a processor, where the processor is coupled to the memory. The program code stored in the memory includes instructions. When the processor executes the instructions, the seventeenth type of communication apparatus is enabled to perform the method according to any one of the fifth aspect or the possible implementations of the fifth aspect.

The seventeenth type of communication apparatus may further include a communication interface. The communication interface may be a transceiver in the network device, for example, implemented by using an antenna, a feeder, and a codec in the communication apparatus. Alternatively, if the seventeenth type of communication apparatus is the chip disposed in the network device, the communication interface may be an input/output interface in the chip, for example, an input/output pin.

According to a twenty-fourth aspect, an eighteenth type of communication apparatus is provided. The communication apparatus may be the sixth communication apparatus in the foregoing method designs. For example, the communication apparatus is a chip disposed in a network device. The communication apparatus includes: a memory, configured to store computer executable program code; and a processor, where the processor is coupled to the memory. The program code stored in the memory includes instructions. When the processor executes the instructions, the eighteenth type of communication apparatus is enabled to perform the method according to any one of the sixth aspect or the possible implementations of the sixth aspect.

The eighteenth type of communication apparatus may further include a communication interface. The communication interface may be a transceiver in the network device, for example, implemented by using an antenna, a feeder, and a codec in the communication apparatus. Alternatively, if the eighteenth type of communication apparatus is the chip disposed in the network device, the communication interface may be an input/output interface in the chip, for example, an input/output pin.

According to a twenty-fifth aspect, a first communication system is provided. The communication system may include the first type of communication apparatus according to the seventh aspect, the seventh type of communication apparatus according to the thirteenth aspect, or the thirteenth type of communication apparatus according to the nineteenth aspect, and include the second type of communication apparatus according to the eighth aspect, the eighth type of communication apparatus according to the fourteenth aspect, or the fourteenth type of communication apparatus according to the twentieth aspect.

According to a twenty-sixth aspect, a second communication system is provided. The communication system may include the third type of communication apparatus according to the ninth aspect, the ninth type of communication apparatus according to the fifteenth aspect, or the fifteenth type of communication apparatus according to the twenty-first aspect, and include the fourth type of communication apparatus according to the tenth aspect, the tenth type of communication apparatus according to the sixteenth aspect, or the sixteenth type of communication apparatus according to the twenty-second aspect.

According to a twenty-seventh aspect, a third communication system is provided. The communication system may include the fifth type of communication apparatus according to the eleventh aspect, the eleventh type of communication apparatus according to the seventeenth aspect, or the seventeenth type of communication apparatus according to the twenty-third aspect, and include the sixth type of communication apparatus according to the twelfth aspect, the twelfth type of communication apparatus according to the eighteenth aspect, or the eighteenth type of communication apparatus according to the twenty-fourth aspect.

The first communication system, the second communication system, and the third communication system may be a same communication system, or may be different communication systems. Alternatively, any two of them may be a same communication system, and a remaining one is a different communication system.

According to a twenty-eighth aspect, a computer storage medium is provided. The computer-readable storage medium stores instructions. When the instructions are run on a computer, the computer is enabled to perform the method according to any one of the first aspect or the possible designs of the first aspect.

According to a twenty-ninth aspect, a computer storage medium is provided. The computer-readable storage medium stores instructions. When the instructions are run on a computer, the computer is enabled to perform the method according to any one of the second aspect or the possible designs of the second aspect.

According to a thirtieth aspect, a computer storage medium is provided. The computer-readable storage medium stores instructions. When the instructions are run on a computer, the computer is enabled to perform the method according to any one of the third aspect or the possible designs of the third aspect.

According to a thirty-first aspect, a computer storage medium is provided. The computer-readable storage medium stores instructions. When the instructions are run on a computer, the computer is enabled to perform the method according to any one of the fourth aspect or the possible designs of the fourth aspect.

According to a thirty-second aspect, a computer storage medium is provided. The computer-readable storage medium stores instructions. When the instructions are run on a computer, the computer is enabled to perform the method according to any one of the fifth aspect or the possible designs of the fifth aspect.

According to a thirty-third aspect, a computer storage medium is provided. The computer-readable storage medium stores instructions. When the instructions are run on a computer, the computer is enabled to perform the method according to any one of the sixth aspect or the possible designs of the sixth aspect.

According to a thirty-fourth aspect, a computer program product including instructions is provided. The computer program product stores the instructions. When the instructions are run on a computer, the computer is enabled to perform the method according to any one of the first aspect or the possible designs of the first aspect.

According to a thirty-fifth aspect, a computer program product including instructions is provided. The computer program product stores the instructions. When the instructions are run on a computer, the computer is enabled to perform the method according to any one of the second aspect or the possible designs of the second aspect.

According to a thirty-sixth aspect, a computer program product including instructions is provided. The computer program product stores the instructions. When the instructions are run on a computer, the computer is enabled to perform the method according to any one of the third aspect or the possible designs of the third aspect.

According to a thirty-seventh aspect, a computer program product including instructions is provided. The computer program product stores the instructions. When the instructions are run on a computer, the computer is enabled to perform the method according to any one of the fourth aspect or the possible designs of the fourth aspect.

According to a thirty-eighth aspect, a computer program product including instructions is provided. The computer program product stores the instructions. When the instructions are run on a computer, the computer is enabled to perform the method according to any one of the fifth aspect or the possible designs of the fifth aspect.

According to a thirty-ninth aspect, a computer program product including instructions is provided. The computer program product stores the instructions. When the instructions are run on a computer, the computer is enabled to perform the method according to any one of the sixth aspect or the possible designs of the sixth aspect.

In the embodiments of this application, if measurement performed by the terminal device on the first reference signal affects signal sending and/or receiving, both the terminal device and the network device can determine a scheduling limitation generated when the terminal device performs measurement, so that the terminal device may neither receive the signal other than the first reference signal nor send any signal on a time domain symbol having the scheduling limitation, to avoid interference, caused by measurement, to sending and/or receiving of another signal as much as possible.

### BRIEF DESCRIPTION OF DRAWINGS

FIG. 1 is a schematic diagram of a CLI measurement scenario;
FIG. 2 is a schematic diagram of an application scenario according to an embodiment of this application;
FIG. 3 is a flowchart of a first communication method according to an embodiment of this application;
FIG. 4 is a flowchart of a second communication method according to an embodiment of this application;
FIG. 5 is a flowchart of a third communication method according to an embodiment of this application;
FIG. 6 is a schematic block diagram of a first terminal device according to an embodiment of this application;
FIG. 7 is another schematic block diagram of a first terminal device according to an embodiment of this application;
FIG. 8 is a schematic block diagram of a first network device according to an embodiment of this application;
FIG. 9 is another schematic block diagram of a first network device according to an embodiment of this application;
FIG. 10 is a schematic block diagram of a second terminal device according to an embodiment of this application;
FIG. 11 is another schematic block diagram of a second terminal device according to an embodiment of this application;
FIG. 12 is a schematic block diagram of a second network device according to an embodiment of this application;
FIG. 13 is another schematic block diagram of a second network device according to an embodiment of this application;
FIG. 14 is a schematic block diagram of a third terminal device according to an embodiment of this application;
FIG. 15 is another schematic block diagram of a third terminal device according to an embodiment of this application;
FIG. 16 is a schematic block diagram of a third network device according to an embodiment of this application;
FIG. 17 is another schematic block diagram of a third network device according to an embodiment of this application;
FIG. 18 is a schematic block diagram of a communication apparatus according to an embodiment of this application;
FIG. 19 is another schematic block diagram of a communication apparatus according to an embodiment of this application; and
FIG. 20 is still another schematic block diagram of a communication apparatus according to an embodiment of this application.

### DESCRIPTION OF EMBODIMENTS

To make the objectives, the technical solutions, and advantages of the embodiments of this application clearer, the following further describes the embodiments of this application in detail with reference to the accompanying drawings.

In the following, some terms of the embodiments of this application are explained and described, to help a person skilled in the art have a better understanding.
(1) A terminal device may be a device that provides a user with voice and/or data connectivity, for example, may be a handheld device with a wireless connection function, or a processing device connected to a wireless modem. The terminal device may communicate with a core network through a radio access network (radio access network, RAN), and exchange voice and/or data with the RAN. The terminal device may include user equipment (user equipment, UE), a wireless terminal device, a mobile terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, a portable, pocket-sized, handheld, computer built-in, or in-vehicle mobile apparatus, an intelligent wearable device, or the like. For example, the terminal device is a device such as a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device with relatively low power consumption, a device with a limited storage capability, or a device with a limited computing capability. For example, the terminal device includes an information sensing device such as a bar code, radio frequency identification (radio frequency identification, RFID), a sensor, a global positioning system (global positioning system, GPS), or a laser scanner.

By way of example and not limitation, the terminal device in the embodiments of this application may alternatively be a wearable device. The wearable device may also be referred to as a wearable intelligent device, and is a general term for wearable devices such as glasses, gloves, watches, clothes, and shoes that are developed by applying wearable technologies in intelligent designs of daily wear. The wearable device is a portable device that is directly worn or integrated into clothes or an accessory of the user. The wearable device is not only a hardware device, but is used to implement a powerful function through software support, data exchange, and cloud interaction. In a broad sense, the wearable intelligent device includes full-featured and large-sized devices that can implement all or some functions without depending on smartphones, for example, smart watches or smart glasses, and devices that focus on only one type of application function and are required to work with other devices such as smartphones, for example, various smart bands, smart helmets, or smart jewelry for monitoring physical signs.

(2) A network device includes, for example, an access network (access network, AN) device such as a base station (for example, an access point), and may be a device that communicates with a wireless terminal device over an air interface through one or more cells in an access network. Alternatively, for example, a network device in a V2X technology is a road side unit (road side unit, RSU). The base station may be configured to mutually convert a received over-the-air frame and a received internet protocol (IP) packet, and serve as a router between the terminal device and the other parts of the access network, where the other parts of the access network may include an IP network. The RSU may be a fixed infrastructure entity that supports a vehicle-to-everything (vehicle-to-everything, V2X) application, and may exchange a message with another entity that supports the V2X application. The access network device may further coordinate attribute management of the air interface. For example, the access network device may include an evolved NodeB (NodeB or eNB or eNodeB, evolved NodeB) in a long term evolution (long term evolution, LTE) system or a long term evolution-advanced (long term evolution-advanced, LTE-A) system, may include a next generation NodeB (next generation NodeB, gNB) in a 5th generation (fifth generation, 5G) new radio (new radio, NR) system, or may include a centralized unit (centralized unit, CU) and a distributed unit (distributed unit, DU) in a cloud radio access network (cloud radio access network, Cloud RAN) system. This is not limited in the embodiments of this application.

Certainly, the network device may further include a core network device. However, the technical solutions provided in the embodiments of this application mainly relate to the access network device. Therefore, unless otherwise specified, "network device" described below is the access network device.

(3) RRM measurement refers to measurement performed by the terminal device to support radio resource management and mobility management. A measurement object, a measurement amount, and corresponding reporting criteria are usually configured by a network. Common RRM measurement includes synchronization signal (synchronization signal, SS)-RSRP measurement, SS-reference signal received quality (reference signal received quality, RSRQ) measurement, or the like. The terminal device may perform measurement based on a configuration of the network device, and report a measurement result to the network device.

(4) The terms "system" and "network" may be used interchangeably in the embodiments of this application. "At least one" refers to one or more, and "a plurality of" refers to two or more. The term "and/or" describes an association relationship between associated objects and represents that three relationships may exist. For example, A and/or B may represent the following three cases: Only A exists, both A and B exist, and only B exists. A and B may be in a singular or plural form. The character "/" usually indicates an "or" relationship between the associated objects. "At least one of the following" or a similar expression thereof indicates any combination of these items, including a single item or any combination of a plurality of items. For example, at least one of a, b, or c may represent: a, b, c, a and b, a and c, b and c, or a, b, and c, where a, b, and c may be singular or plural.

In addition, unless otherwise stated, in the embodiments of this application, ordinal numbers such as "first" and "second" are used to distinguish between a plurality of objects, and are not intended to limit an order, a time sequence, a priority, or importance of the plurality of objects. For example, a first identifier and a second identifier are merely used to distinguish between different identifiers, and do not indicate different content, different priorities, different importance degrees, or the like of the two identifiers.

The foregoing describes some concepts in the embodiments of this application, and the following describes technical features in the embodiments of this application.

CLI measurement on a terminal device side is introduced to Rel-16 NR WI RIM/CLI, and is mainly used to evaluate an interference level, during use of a dynamic uplink-downlink configuration, of uplink transmission of a terminal device in a neighboring cell to receiving downlink data of a serving cell by a terminal device in the serving cell. The CLI measurement may include two types of measurement: SRS-RSRP measurement and CLI-RSSI measurement. The SRS-RSRP measurement means measuring an RSRP of an SRS from the terminal device in the neighboring cell, and the CLI-RSSI measurement means measuring an RSSI from a specified time-frequency resource. A reference signal may be an SRS, or may be another reference signal.

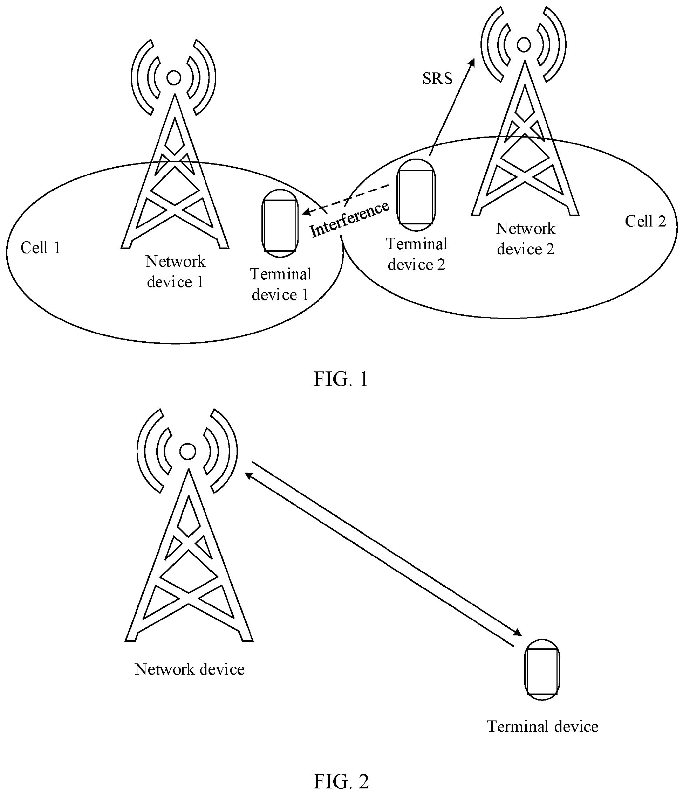

FIG. 1 is a schematic diagram of a CLI measurement scenario. FIG. 1 includes a network device 1, a network device 2, a terminal device 1, and a terminal device 2. The terminal device 1 is distributed in a cell 1 provided by the network device 1, and the terminal device 2 is distributed in a cell 2 provided by the network device 2. At some moments, the terminal device 2 sends an SRS, an uplink control channel, or an uplink data channel to the cell 2, and the terminal device 1 receives a downlink control channel or a downlink data channel from the network device 1. Because the cell 2 and the cell 1 are neighboring cells, uplink information (the SRS, the uplink control channel, or the uplink data channel) sent by the terminal device 2 may also be received by the terminal device 1, and a receiving process of the terminal device 1 is interfered with. Therefore, the network device 1 may configure the terminal device 1 to measure an RSRP of the SRS from the terminal device 2 (or from another device in the cell 2, from the terminal device 2 and the another device in the cell 2, from the terminal device 2 and a device in another cell, from the device in the another cell, from the another device in the cell 2 and the device in the another cell, or from the terminal device 2, the another device in the cell 2, and the device in the another cell) or an RSSI, to determine an interference level, and make a corresponding scheduling decision, perform coordination with the network device 2, or the like based on the interference level.

Certainly, in FIG. 1, an example in which two cells are provided by different network devices is used. Alternatively, the cell 1 in which the terminal device 1 is located and the cell 2 in which the terminal device 2 is located are provided by a same network device, but the cell 1 and the cell 2 are adjacent to each other. In this case, the SRS sent by the terminal device 2 may also be received by the terminal device 1, and a sending and/or receiving process of the terminal device 1 is interfered with. In this case, the terminal device 1 may also measure the RSRP of the SRS from the terminal device 2 or the RSSI, to determine the interference level.

According to a conclusion of a RAN 1, an SRS-RSRP measurement configuration is the same as a configuration for configuring a terminal device to send an SRS. The measurement configuration may include time-frequency resource information of the SRS, information about a comb (comb), a root sequence of the SRS, a cyclic shift, and the like. The comb means, for example, that one resource block (resource block, RB) includes 12 subcarriers in frequency domain, but SRSs may not be sent on all subcarriers, for example, the SRSs may be sent at one-subcarrier intervals, and such frequency domain distribution of the SRSs may be referred to as the comb. Currently, there are mainly two types of the comb, and corresponding values are Comb=2 and Comb=4. If Comb=2, it indicates that corresponding reference signals are sent on every two subcarriers in frequency domain. If Comb=4, it indicates that the corresponding reference signals are sent on every four subcarriers in frequency domain.

According to a conclusion of the RAN 1, timing of the CLI measurement is determined by implementation of the terminal device. The timing of the CLI measurement refers to time at which the terminal device should detect, when performing CLI measurement, a reference signal used to perform CLI measurement. The reference signal used for the CLI measurement is sent by a terminal device in a neighboring cell. Therefore, relative to downlink timing of a terminal device in a serving cell, the timing of the CLI measurement usually has a timing advance relative to the downlink timing in the serving cell.

Current RRM measurement is based on the downlink timing of the terminal device in the serving cell. The downlink timing of the terminal device in the serving cell refers to a moment at which the terminal device receives a downlink signal in the serving cell. However, the CLI measurement is based on timing determined by the terminal device, where the timing determined by the terminal device usually has an advance relative to the downlink timing of the terminal device. Therefore, scheduling limitations of the existing RRM measurement cannot be applicable to the CLI measurement, and symbols on which the scheduling limitations are generated when the terminal device performs CLI measurement are currently unclear yet.

Currently, TS 38.133 defines, for RRM measurement, scheduling limitations caused by mixed subcarrier spacings and receiving beam sweeping. The mixed subcarrier spacings mean that a subcarrier spacing of an SSB is different from a subcarrier spacing of data. When the terminal device does not support receiving of two different subcarrier spacings simultaneously, a scheduling limitation is generated. The receiving beam sweeping causes a scheduling limitation because a receiving beam used by the terminal device during measurement is different from a receiving beam used by the terminal device when receiving data of a serving cell. Therefore, the terminal device cannot perform data transmission with the serving cell during measurement. The scheduling limitation means that the terminal device may receive no data on a specified symbol.

In view of this, the technical solutions in the embodiments of this application are provided. In the embodiments of this application, a terminal device may determine whether the terminal device supports sending and/or receiving of a signal other than a first reference signal in a measurement process. If the terminal device determines that the terminal device does not support sending and/or receiving of the signal other than the first reference signal in the measurement process, the terminal device may receive only the first reference signal within a first time domain range. Receiving only the first reference signal within the first time domain range may be understood as that, within the first time domain range, the terminal device receives only the first reference signal, and neither receives the signal other than the first reference signal nor sends any signal. In other words, if the terminal device considers that measurement on the first reference signal affects signal sending and/or receiving, the terminal device can determine a scheduling limitation generated when the terminal device performs measurement, so that the terminal device may neither receive the signal other than the first reference signal nor send any signal on a time domain symbol having the scheduling limitation. The scheduling limitation is specified, to avoid, as much as possible, a failure that is of sending and/or receiving another signal and that is because the terminal device cannot send and/or receive the first reference signal and the another signal simultaneously, and a waste of network resources caused thereby.

FIG. 2 shows an application scenario according to an embodiment of this application. FIG 2 includes a network device and a terminal device, and the terminal device is connected to the network device. Certainly, a quantity of terminal devices in FIG. 2 is merely an example. During actual application, the network device may serve a plurality of terminal devices. The network device and all or some of the plurality of terminal devices each may determine a scheduling limitation according to a method provided in the embodiments of this application. In addition, the terminal device in FIG. 2 is required to measure a reference signal from a terminal device in a neighboring cell of a serving cell in which the terminal device is located. However, in FIG. 2, the neighboring cell of the serving cell in which the terminal device is located is not drawn, and the terminal device in the neighboring cell is not drawn either. The neighboring cell of the serving cell in which the terminal device is located and the serving cell may belong to a same network device, namely, the network device in FIG. 2. Alternatively, the neighboring cell of the serving cell in which the terminal device is located and the serving cell may belong to different network devices. For example, the serving cell belongs to the network device in FIG. 2, and the neighboring cell of the serving cell may belong to another network device not drawn in FIG. 2.

The network device in FIG. 2 is, for example, an access network device such as a base station. The network device corresponds to different devices in different systems. For example, the network device may correspond to an eNB in a fourth generation (4th generation, 4G) system, and may correspond to a gNB in a 5G system. If this embodiment of this application is applied to a future communication system, the network device may correspond to an access network device in the future communication system.

The following describes the technical solutions provided in the embodiments of this application with reference to the accompanying drawings. In the embodiments of this application, concepts of "carrier" and "cell" may be exchanged.

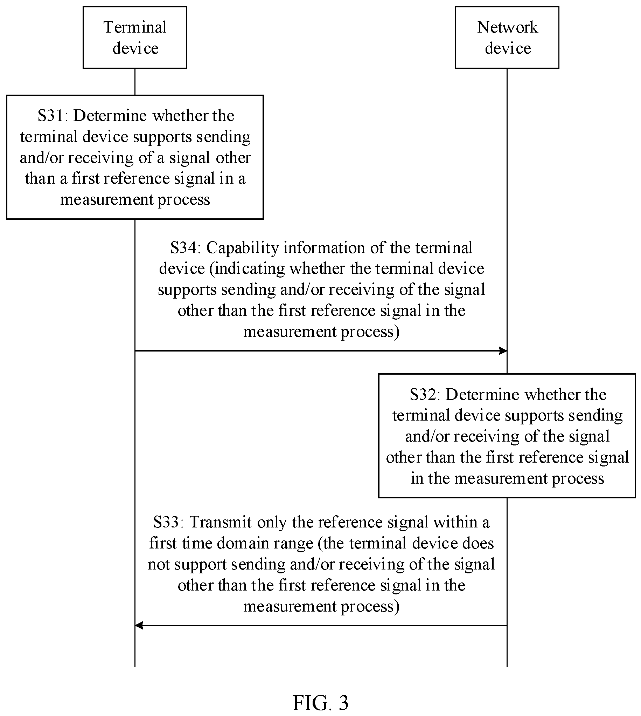

An embodiment of this application provides a first communication method. FIG. 3 is a flowchart of the method. In the following description process, an example in which the method is applied to the network architecture shown in FIG. 2 is used. In addition, the method may be performed by two communication apparatuses. The two communication apparatuses are, for example, a first communication apparatus and a second communication apparatus. The first communication apparatus may be a network device or a communication apparatus that can support a function required by the network device to implement the method. Alternatively, the first communication apparatus may be a terminal device or a communication apparatus that can support a function required by the terminal device to implement the method. Certainly, the first communication apparatus may alternatively be another communication apparatus such as a chip system. Similarly, the second communication apparatus may be a network device or a communication apparatus that can support a function required by the network device to implement the method, or the second communication apparatus may be a terminal device or a communication apparatus that can support a function required by the terminal device to implement the method. Certainly, the second communication apparatus may alternatively be another communication apparatus such as a chip system. In addition, implementations of both the first communication apparatus and the second communication apparatus are not limited. For example, the first communication apparatus may be a network device, and the second communication apparatus is a terminal device; both the first communication apparatus and the second communication apparatus are network devices; both the first communication apparatus and the second communication apparatus are terminal devices; or the first communication apparatus is a network device, and the second communication apparatus is a communication apparatus that can support a function required by a terminal device to implement the method. The network device is, for example, a base station.

For ease of description, the following uses an example in which the method is performed by a network device and a terminal device. In other words, an example in which the first communication apparatus is the network device and the second communication apparatus is the terminal device is used. If this embodiment is applied to the network architecture shown in FIG. 2, a network device described below may be the network device in the network architecture shown in FIG. 2, and a terminal device described below may be the terminal device in the network architecture shown in FIG. 2. Another device described below may be a terminal device, for example, the terminal device located in the neighboring cell of the serving cell of the terminal device shown in FIG. 2, or may be a network device, for example, the another network device not drawn in FIG. 2. The neighboring cell of the serving cell may be provided by the network device shown in FIG. 2, or may be provided by the another network device not drawn in FIG. 2.

S31: The terminal device determines whether the terminal device supports sending and/or receiving of a signal other than a first reference signal in a measurement process, where the first reference signal is used by the terminal device to perform measurement in the measurement process.

The first reference signal may be a reference signal used by the terminal device to perform measurement. The first reference signal is, for example, an SRS, or may be another reference signal, for example, a channel state information reference signal (channel state information reference signal, CSI-RS). This is not specifically limited. There may be a plurality of reference signals, but only a reference signal used by the terminal device in this embodiment of this application to perform measurement is referred to as the first reference signal. Correspondingly, it may be understood that the measurement process in this embodiment of this application is a measurement process corresponding to the first reference signal. In other words, in the measurement process, the terminal device is required to measure the first reference signal. For example, if the network device configures the terminal device to measure a reference signal 1, and the terminal device may receive the reference signal 1 and a reference signal 2, but the network device does not configure the terminal device to measure the reference signal 2, the reference signal 1 is the first reference signal, and the reference signal 2 is not the first reference signal.

The another device that sends the first reference signal may be referred to as a first device. The first device may be a terminal device, a network device, or the like. A type of the first device is not limited.

The terminal device may determine capability information of the terminal device. The capability information of the terminal device may indicate a plurality of capabilities of the terminal device. Capability information of the terminal device concerned in this embodiment of this application can indicate a capability of whether the terminal device supports sending and/or receiving of the signal other than the first reference signal in the measurement process, so that the terminal device can determine that the terminal device supports sending and/or receiving of the signal other than the first reference signal in the measurement process or that the terminal device does not support sending and/or receiving of the signal other than the first reference signal in the measurement process. Whether the terminal device further determines other capability information of the terminal device is not limited in this embodiment of this application.

For example, if sending and/or receiving the signal other than the first reference signal by the terminal device in the measurement process is affected by the measurement process or is relatively greatly affected by the measurement process, the capability information may indicate that the terminal device does not support sending and/or receiving of the signal other than the first reference signal in the measurement process. The measurement process herein may be CLI measurement, or may be another measurement process. In addition, sending and/or receiving of the signal other than the first reference signal in the measurement process may be understood as receiving of the signal other than the first reference signal in the measurement process, sending any signal (including the first reference signal and another signal) in the measurement process, or receiving the signal other than the first reference signal in the measurement process and sending any signal in the measurement process.

The signal other than the first reference signal may include a control signal, for example, a physical uplink control channel (physical uplink control channel, PUCCH) or a physical downlink control channel (physical downlink control channel, PDCCH), include a data signal, for example, a physical uplink shared channel (physical uplink shared channel, PUSCH) or a physical downlink shared channel (physical downlink shared channel, PDSCH), or include a control signal, a data signal, and the like. This is not specifically limited.

S32: The network device determines whether the terminal device supports sending and/or receiving of the signal other than the first reference signal in the measurement process.

For example, after determining the capability information of the terminal device, the terminal device may send the capability information to the network device. After receiving the capability information from the terminal device, the network device may determine, based on the capability information, whether the terminal device supports sending and/or receiving of the signal other than the first reference signal in the measurement process. For this, refer to S34 in FIG. 3. The terminal device sends the capability information of the terminal device to the network device, and the network device receives the capability information from the terminal device, where the capability information may indicate whether the terminal device supports sending and/or receiving of the signal other than the first reference signal in the measurement process. S34 may occur before S32 and after S31.

Likewise, the capability information sent by the terminal device to the network device may be information that can indicate the capability of whether the terminal device supports sending and/or receiving of the signal other than the first reference signal in the measurement process. Whether the terminal device further sends the other capability information of the terminal device to the network device is not limited in this embodiment of this application.

S33: When the network device determines that the terminal device does not support sending and/or receiving of the signal other than the first reference signal in the measurement process, the network device sends only the first reference signal within a first time domain range, and the terminal device receives only the first reference signal within the first time domain range, where the first time domain range includes a first time domain symbol and a second time domain symbol, the first time domain symbol is a time domain symbol configured by the network device, the second time domain symbol includes N time domain symbols before the first time domain symbol and/or N time domain symbols after the first time domain symbol, and N may be a positive integer.

Before S32 and after S31, or before S31, the network device may further configure the terminal device to perform measurement, for example, configure the terminal device to perform SRS-RSRP measurement, configure the terminal device to perform CLI-RSSI measurement, or configure the terminal device to perform other measurement. In addition, the network device may configure a time domain symbol used by the terminal device to perform measurement. A time domain symbol that is configured by the network device and on which the first reference signal used by the terminal device to perform measurement is located is the first time domain symbol.

The terminal device may perform measurement based on a configuration of the network device. If the network device determines that the terminal device does not support sending and/or receiving of the signal other than the first reference signal in the measurement process, the network device may not send the signal other than the first reference signal to the terminal device within the first time domain range. It may be understood as that the network device may send, within the first time domain range, the first reference signal used for measurement (or may not send the first reference signal) to the terminal device, or may send the signal other than the first reference signal to the terminal device. However, the network device does not expect that the terminal device may correctly receive the signal other than the first reference signal, and the network device does not expect that the terminal device may send any signal within the first time domain range. Since the network device does not expect that the terminal device may send any signal within the first time domain range, an implementation of the network device is that the network device may not detect (or described as receive) any signal from the terminal device within the first time domain range.

Alternatively, if the network device determines that the terminal device does not support sending and/or receiving of the signal other than the first reference signal in the measurement process, since the network device does not expect that the terminal device may correctly receive the signal other than the first reference signal, the network device may send, within the first time domain range, the first reference signal used for measurement (or may not send the first reference signal) to the terminal device, but does not send the signal other than the first reference signal to the terminal device within the first time domain range, and the network device does not expect that the terminal device may send any signal within the first time domain range either. Since the network device does not expect that the terminal device may send any signal within the first time domain range, an implementation of the network device is that the network device may not detect (or described as receive) any signal from the terminal device within the first time domain range.

If the terminal device determines that the terminal device does not support sending and/or receiving of the signal other than the first reference signal in the measurement process, the terminal device receives only the first reference signal within the first time domain range. This may be understood as that, within the first time domain range, the terminal device receives only the first reference signal, and neither receives the signal other than the first reference signal nor sends any signal. In other words, the terminal device does not expect to send and/or receive the signal other than the first reference signal within the first time domain range. Because the terminal device is required to perform measurement within the first time domain range, the terminal device may receive, within the first time domain range, only the first reference signal used for measurement, for example, an SRS, but neither receives the signal other than the first reference signal nor sends any signal, to avoid that a signal sending and/or receiving process is affected by the measurement process.

The first time domain symbol is a symbol that is configured by the network device and on which the first reference signal used by the terminal device to perform measurement is located. In other words, the first time domain symbol is a time domain symbol that is configured by the network device and on which the first reference signal measured by the terminal device and from the another device is located. In other words, the first time domain symbol is a time domain symbol that is configured by the network device and that is used by the terminal device to perform measurement.

The first time domain symbol may include one or more time domain symbols, and this is related to a quantity of time domain symbols that are configured by the network device and that occupied by the terminal device to perform measurement. The measurement herein is, for example, the CLI measurement, or may be other measurement. The time domain symbol is, for example, an orthogonal frequency division multiplexing (orthogonal frequency division multiplexing, OFDM) symbol.

The following describes, by using an example in which the measurement is the CLI measurement, how the network device configures the first time domain symbol. If the measurement is the CLI measurement, the first reference signal is sent by another terminal device. The network device may obtain information such as an uplink-downlink configuration and a reference signal sending configuration of a cell in which the another terminal device is located, thereby determining, based on the information, a time domain symbol used by a terminal device in another cell to send the first reference signal. The network device may determine, as the first time domain symbol, the time domain symbol used by the terminal device in the another cell to send the first reference signal. Alternatively, if the network device cannot obtain the information such as the uplink-downlink configuration and the reference signal sending configuration of the cell in which the another terminal device is located, or the information obtained by the network device is not accurate enough, the network device may configure the terminal device to receive, on a plurality of time domain symbols, the first reference signal from the another terminal device. In other words, in this case, the first time domain symbol may include a relatively large quantity of time domain symbols. After configuring the first time domain symbol, the network device may send information about the first time domain symbol to the terminal device. After receiving the information about the first time domain symbol, the terminal device may determine the first time domain range by considering timing of the another terminal device based on the first time domain symbol. For example, if another terminal device is relatively far away from the terminal device and timing is relatively long, the terminal device may determine that the terminal device is required to start detecting a first reference signal from the another terminal device from the N time domain symbols before the first time domain symbol. For example, N is a quantity of time domain symbols corresponding to timing of the another terminal device. In other words, the terminal device detects the first reference signal from the terminal device within the first time domain range.

It can be learned from the description in the last paragraph that although the network device configures the terminal device to perform measurement on the first time domain symbol, because the another device that sends the first reference signal may be the terminal device in the neighboring cell, or may be the another network device or the like, measurement timing is different, for example, the timing is advanced relative to the first time domain symbol configured by the network device. Therefore, when performing measurement, the terminal device may actually perform measurement within the first time domain range. The first time domain range includes the first time domain symbol, includes the second time domain symbol, or includes the first time domain symbol and the second time domain symbol. The second time domain symbol may include one or more time domain symbols.

If the first time domain range includes only the first time domain symbol, it indicates that the terminal device actually performs measurement on the first time domain symbol configured by the network device. Alternatively, if the first time domain range includes only the second time domain symbol, it indicates that the terminal device actually performs measurement on the second time domain symbol. Alternatively, if the first time domain range includes the first time domain symbol and the second time domain symbol, it indicates that the terminal device actually performs measurement on the first time domain symbol and the second time domain symbol.

Therefore, that the first time domain symbol is the time domain symbol on which the first reference signal is located in S33 means that the first time domain symbol is a time domain symbol that is configured by the network device and that is used by the terminal device to measure the first reference signal, and a time domain symbol on which the terminal device actually measures the first reference signal is a time domain symbol included within the first time domain range.

It should be noted herein that the first time domain symbol is a symbol configured by the network device and used for measurement. In a scenario in which the terminal device measures the first reference signal, the first reference signal is sent by a transmit end on the first time domain symbol. In another possible scenario, the network device may configure the first time domain symbol, but there may not be the first reference signal used for measurement on the first time domain symbol, and the terminal device does not perform measurement either.

Although the network device configures the terminal device to perform measurement on the first time domain symbol, because the another device that sends the first reference signal may be the terminal device in the neighboring cell, or may be the another network device or the like, the measurement timing is usually advanced relative to downlink timing of the terminal device in the serving cell. Therefore, the second time domain symbol may include the N time domain symbols before the first time domain symbol. Certainly, for insurance purposes, the second time domain symbol may alternatively include the N time domain symbols after the first time domain symbol, or include the N time domain symbols before the first time domain symbol and the N time domain symbols after the first time domain symbol. In this way, a scheduling limitation is also specified.

A value of N may be determined by the network device, and the network device may notify the terminal device after determining the value. For example, the network device determines the value of N, and sends a first message to the terminal device, where the first message is used to indicate the value of N. In this way, the terminal device determines the value of N. Alternatively, the network device may not notify the terminal device of a specific value of N. For example, the network device may send a first message to the terminal device, but the first message does not indicate the value of N, and indicates a largest value in timing advances used when the terminal device measures the first reference signal. In this case, the terminal device may determine the value of N based on the largest value in the timing advances used when the terminal device measures the first reference signal. Certainly, if the terminal device determines that the value of N is exactly equal to a symbol quantity corresponding to the largest value in the timing advances used when the terminal device measures the first reference signal, the two operations, namely, that the network device indicates, by using the first message, the largest value in the timing advances used when the terminal device measures the first reference signal and indicates the value of N by using the first message, may be considered as equivalent.

Alternatively, the value of N may be determined by the terminal device. Further, after determining the value of N, the terminal device may notify the network device or report the value to the network device. For example, the terminal device determines the value of N, and sends a second message to the network device, where the second message is used to indicate the value of N. In this way, the network device determines the value of N. Alternatively, the terminal device may not notify the network device of the specific value of N. For example, the terminal device may send a second message to the network device, but the second message does not indicate the value of N, and indicates a timing advance having the largest value (or referred to as the largest value in the timing advances) and used when the terminal device measures the first reference signal. In this case, the network device may determine the value of N based on the timing advance having the largest value and used when the terminal device measures the first reference signal. Certainly, if the terminal device determines that the value of N is exactly equal to a symbol quantity corresponding to the timing advance having the largest value and used when the terminal device measures the first reference signal, the two operations, namely, that the terminal device indicates, by using the second message, the timing advance having the largest value and used when the terminal device measures the first reference signal and indicates the value of N by using the second message, may be considered as equivalent.

Regardless of whether the network device determines the value of N or the terminal device determines the value of N, one of the following determining manners may be used.
1. The value of N is a predefined value.

For example, the value of N is preconfigured by the network device for the terminal device, the value of N is preconfigured in the terminal device, or the value of N may be specified in a protocol. For example, N=2, or N may be another value.

2. The value of N is determined based on a subcarrier spacing (subcarrier spacing, SCS) of the serving cell of the terminal device. In other words, the value of N is related to the subcarrier spacing of the serving cell of the terminal device.

Lengths of a time domain symbol vary with different subcarrier spacings. Therefore, a quantity of second time domain symbols included within the first time domain range may be determined based on the subcarrier spacing of the serving cell of the terminal device.

3. The value of N is determined based on a frequency range to which the serving cell of the terminal device belongs. In other words, the value of N is related to the frequency range to which the serving cell of the terminal device belongs.

Frequencies may be divided into different ranges. For example, in a division manner at a relatively coarse granularity, the frequencies are divided into a high frequency and a low frequency. For example, a frequency greater than or equal to 6 GHz is a high frequency, and a frequency less than 6 GHz is a low frequency. For the high frequency, a radius of a cell is smaller, and a timing advance used by a signal from another device is smaller. In other words, when the first reference signal is measured, timing of receiving the first reference signal may not be greatly advanced relative to the downlink timing of the terminal device in the serving cell. Therefore, the value of N may be smaller. For example, N=1. However, for the low frequency, the radius of the cell is larger, and the timing advance used by the signal from the another device is larger. In other words, when the first reference signal is measured, the timing of receiving the first reference signal may be greatly advanced relative to the downlink timing of the terminal device in the serving cell. Therefore, the value of N may be larger. For example, N=2.

Certainly, the frequency division manner herein is merely an example. During actual application, the frequencies may be further divided into more ranges, and values of N corresponding to different frequency ranges may be different. A division point of 6 GHz is merely an example. Even if the frequencies are divided into only two ranges, another division point may be selected. Naturally, the value of N is also merely an example, and is not specifically limited thereto.

4. The value of N is determined based on a timing advance (timing advance, TA) of the terminal device in the serving cell. In other words, the value of N is related to the timing advance of the terminal device in the serving cell.

A timing advance may be understood from a perspective of a relative moment. Timing specified in all communication protocols is a relative moment. Generally, a time reference point (the time reference point may be a start moment that is of a radio frame used for downlink reception and that is determined based on a synchronization signal) is defined in the communication protocols. Uplink sending timing in the communication protocols usually has an offset relative to the time reference point. The offset is the timing advance. The timing advance of the terminal device in the serving cell is an offset of timing of the terminal device in the serving cell relative to the time reference point.

In this case, the value of N may be determined based on the TA. For example, the value of N is equal to a symbol quantity corresponding to the TA, or the value of N may be a function of the TA. For example, N=k×T, or N=k+T. T represents the symbol quantity corresponding to the TA, and k is a coefficient.

5. The value of N is determined based on the largest value in the timing advances used when the terminal device measures the first reference signal. In other words, the value of N is related to the largest value in the timing advances used when the terminal device measures the first reference signal.

In the measurement process, the terminal device may be required to measure first reference signals from a plurality of other devices, and timing advances determined by the terminal device may be different for different devices. For example, for a device with a greater distance, a timing advance determined by the terminal device may be larger. Before one measurement process starts, the terminal device may determine corresponding timing advances for all first reference signals that are required to be measured (in other words, for all devices that send the first reference signals), thereby determining the value of N based on a timing advance having a largest value in the timing advances (that is, the largest value in the timing advances). For example, the value of N may be greater than or equal to a symbol quantity corresponding to the timing advance having the largest value, to avoid, as much as possible, interference caused by the measurement process to signal sending and/or receiving.

The foregoing describes several manners of determining the value of N. During actual application, which manner is selected may be determined by the network device or the terminal device, or may be specified in the protocol. In addition, a manner of determining the value of N is not limited in this embodiment of this application. For example, in addition to the foregoing several determining manners, other possible manners of determining the value of N also fall within the protection scope of this embodiment of this application.

The foregoing describes a case in which the terminal device does not support sending and/or receiving of the signal other than the first reference signal in the measurement process. There is another case in which the terminal device may alternatively support sending and/or receiving of the signal other than the first reference signal in the measurement process. In this case, there are also different further considerations.

If the terminal device supports sending and/or receiving of the signal other than the first reference signal in the measurement process, a measurement manner used when the terminal device measures the first reference signal may be further considered. For example, when measuring the first reference signal, the terminal device may use a fixed receiving beam, or may use a beam sweeping manner. However, if the beam sweeping manner is used, a receiving beam used by the terminal device during measurement is different from a receiving beam used by the terminal device when receiving data of the serving cell. In this case, when the terminal device performs measurement, if the serving cell sends a signal to the terminal device, the terminal device cannot receive the signal.

In consideration of this case, if the network device determines that the terminal device supports sending and/or receiving of the signal other than the first reference signal in the measurement process, and the network device determines that the terminal device does not use the beam sweeping manner in the measurement process, the network device may send the first reference signal to the terminal device within the first time domain range, may receive a first signal from the terminal device within the first time domain range, may send the first signal to the terminal device within the first time domain range, or may receive the first signal from the terminal device and send the third signal to the terminal device within the first time domain range. Both the first signal and the third signal are signals other than the first reference signal, and types of the first signal and the third signal may be the same, or may be different. Correspondingly, if the terminal device determines that the terminal device supports sending and/or receiving of the signal other than the first reference signal in the measurement process, and the terminal device determines not to use the beam sweeping manner in the measurement process, the terminal device may receive the first reference signal within the first time domain range, may send a first signal to the network device within the first time domain range, may receive a first signal from the network device within the first time domain range, or may send the first signal to the network device and receive a third signal from the network device within the first time domain range. In other words, if the terminal device supports sending and/or receiving of the signal other than the first reference signal in the measurement process, and the terminal device does not use the beam sweeping manner in the measurement process, the terminal device may send and/or receive the another signal in addition to receiving the first reference signal within the first time domain range. A sending and/or receiving process of the another signal is not affected by the measurement process, or is slightly affected by the measurement process. Quality of the sending and/or receiving process of the another signal can be ensured, and communication efficiency can be improved in this manner.

Alternatively, if the network device determines that the terminal device supports sending and/or receiving of the signal other than the first reference signal in the measurement process, and the network device determines that the terminal device uses the beam sweeping manner in the measurement process, the network device does not send the signal other than the first reference signal to the terminal device within the first time domain range. It may be understood as that the network device may send, within the first time domain range, the first reference signal used for measurement to the terminal device, or may not send the first reference signal to the terminal device. However, the network device may not send any signal other than the first reference signal to the terminal device, and the network device may not receive any signal from the terminal device within the first time domain range either. Correspondingly, if the terminal device determines that the terminal device supports sending and/or receiving of the signal other than the first reference signal in the measurement process, and the terminal device determines to use the beam sweeping manner in the measurement process, the terminal device receives only the first reference signal within the first time domain range. This may be understood as that, within the first time domain range, the terminal device receives only the first reference signal, and neither receives the signal other than the first reference signal nor sends any signal. In other words, the terminal device does not expect to send and/or receive the signal other than the first reference signal within the first time domain range. Because the terminal device is required to perform measurement within the first time domain range, the terminal device may receive, within the first time domain range, only the first reference signal used for measurement, for example, an SRS, but neither receives the signal other than the first reference signal nor sends any signal, to avoid that a signal sending and/or receiving process is interfered with by the measurement process.

In this embodiment of this application, impact on data transmission when the terminal device performs measurement is specified, so that the network device and the terminal device have a consistent understanding of a time domain symbol having a scheduling limitation, to avoid, as much as possible, a failure that is of sending and/or receiving the another signal and that is because the terminal device cannot send and/or receive the first reference signal and the another signal simultaneously, and a waste of network resources caused thereby.

Next, another question is considered. In an SRS configuration in LTE, one terminal device may send an SRS by using one antenna port (port), or may send SRSs by using a plurality of antenna ports. When the terminal device sends the SRSs by using the plurality of antenna ports, cyclic shifts corresponding to SRSs sent by using different antenna ports are different, and a difference between the different cyclic shifts is a maximum quantity of cyclic shifts/a quantity of the antenna ports.

However, if the network device configures a plurality of terminal devices to send SRSs on a same comb (comb) of a same symbol, cyclic shifts that are of SRSs and that are used by different terminal devices are separately configured by the network device. The terminal device does not know a configuration of an SRS sent by another terminal device. In addition, there is no limitation when the network device configures the cyclic shifts of the SRSs of the different terminal devices. The terminal device is required to use a detection window to detect an SRS. It may be understood as that the terminal device sets a corresponding detection window for each SRS that is required to be received, and the terminal device detects the corresponding SRS in the detection window. A length of the detection window and a smallest difference between the cyclic shifts that are of the SRSs and that are configured by the network device determine that if the smallest difference between the cyclic shifts that are of the SRSs and that are configured by the network device is smaller, the length of the detection window is smaller. In addition, a total length of detection of the terminal device is fixed. Therefore, the smaller length of the detection window indicates a larger quantity of detection windows. In addition, currently, there is no limitation when the network device configures the cyclic shifts of the SRSs. Therefore, the terminal device can set only a maximum quantity of detection windows corresponding to the comb. For example, if Comb=2, the terminal device is required to set eight detection windows. If Comb=4, the terminal device is required to set 12 detection windows. It can be learned that a length of the detection window is relatively small. However, for an SRS, if a timing advance determined by the terminal device is not accurate enough, the SRS is quite possible to fall outside a detection window corresponding to the SRS, and the terminal device cannot detect the SRS in the detection window corresponding to the SRS, and considers that detection fails. Alternatively, there is another possible case: A difference between cyclic shifts of two SRSs is relatively small, and timing of arriving at the terminal device for measurement by the two SRSs is different. Consequently, two SRSs received by the terminal device may overlap, and the terminal device considers that only one SRS is received, and considers that the other SRS detection fails to be detected.

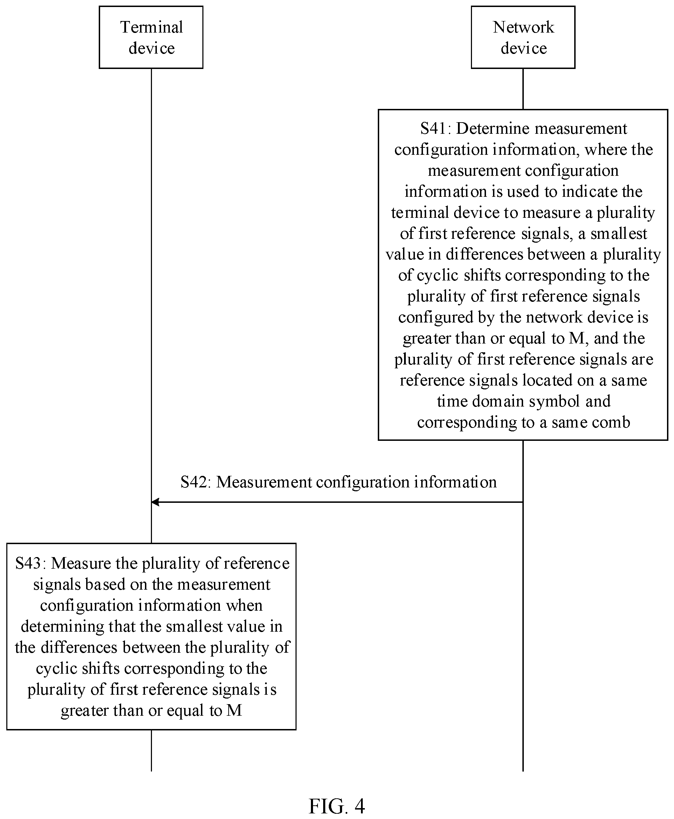

In view of this, an embodiment of this application provides a second communication method. According to the method, a problem of a detection error caused by improper setting of a detection window can be resolved. FIG. 4 is a flowchart of the method. In the following description process, an example in which the method is applied to the network architecture shown in FIG. 2 is used. In addition, the method may be performed by two communication apparatuses. The two communication apparatuses are, for example, a first communication apparatus and a second communication apparatus. The first communication apparatus may be a network device or a communication apparatus that can support a function required by the network device to implement the method. Alternatively, the first communication apparatus may be a terminal device or a communication apparatus that can support a function required by the terminal device to implement the method. Certainly, the first communication apparatus may alternatively be another communication apparatus such as a chip system. Similarly, the second communication apparatus may be a network device or a communication apparatus that can support a function required by the network device to implement the method, or the second communication apparatus may be a terminal device or a communication apparatus that can support a function required by the terminal device to implement the method. Certainly, the second communication apparatus may alternatively be another communication apparatus such as a chip system. In addition, implementations of both the first communication apparatus and the second communication apparatus are not limited. For example, the first communication apparatus may be a network device, and the second communication apparatus is a terminal device; both the first communication apparatus and the second communication apparatus are network devices; both the first communication apparatus and the second communication apparatus are terminal devices; or the first communication apparatus is a network device, and the second communication apparatus is a communication apparatus that can support a function required by a terminal device to implement the method. The network device is, for example, a base station.

For ease of description, the following uses an example in which the method is performed by a network device and a terminal device. In other words, an example in which the first communication apparatus is the network device and the second communication apparatus is the terminal device is used. If this embodiment is applied to the network architecture shown in FIG. 2, a network device described below may be the network device in the network architecture shown in FIG. 2, and a terminal device described below may be the terminal device in the network architecture shown in FIG. 2. Another device described below may be a terminal device, for example, the terminal device located in the neighboring cell of the serving cell of the terminal device shown in FIG. 2, or may be a network device, for example, the another network device not drawn in FIG. 2. The neighboring cell of the serving cell may be provided by the network device shown in FIG. 2, or may be provided by the another network device not drawn in FIG. 2.

S41: The network device determines measurement configuration information, where the measurement configuration information is used to indicate the terminal device to measure a plurality of first reference signals, a smallest value in differences between a plurality of cyclic shifts corresponding to the plurality of first reference signals configured by the network device is greater than or equal to M, and the plurality of first reference signals are reference signals located on a same time domain symbol and corresponding to a same comb

The network device may configure the terminal device to perform measurement. The measurement is, for example, CLI measurement, or may be other measurement.

The first reference signal may be a reference signal used by the terminal device to perform measurement. The first reference signal is, for example, an SRS, or may be another reference signal, for example, a CSI-RS. This is not specifically limited. There may be a plurality of reference signals, but only a reference signal used by the terminal device in this embodiment of this application to perform measurement is referred to as the first reference signal. Correspondingly, it may be understood that a measurement process in this embodiment of this application is a measurement process corresponding to the first reference signal. In other words, in the measurement process, the terminal device is required to measure the first reference signal. For example, if the network device configures the terminal device to measure a reference signal 1, and the terminal device may receive the reference signal 1 and a reference signal 2, but the network device does not configure the terminal device to measure the reference signal 2, the reference signal 1 is the first reference signal, and the reference signal 2 is not the first reference signal.

The first reference signal may be sent by the first device. Certainly, if there are a plurality of first reference signals, the plurality of first reference signals may come from at least one first device. The first device may be a terminal device, or may be a network device or the like. A type of the first device is not limited.

The first reference signals may be sent in a form of a sequence. In this case, the network device may configure a cyclic shift for each first reference signal, and different first reference signals correspond to different cyclic shifts, so that the terminal device can distinguish between the different first reference signals. Since the different first reference signals correspond to the different cyclic shifts, there is a corresponding difference between two cyclic shifts. The plurality of first reference signals may correspond to a plurality of cyclic shifts, and there is a difference between every two first reference signals. The first reference signal may be in a one-to-one correspondence with the cyclic shift. In this embodiment of this application, the network device may configure the smallest difference in the differences between the plurality of cyclic shifts corresponding to the plurality of first reference signals to be greater than or equal to M. In other words, in the plurality of cyclic shifts configured by the network device, a difference between any two cyclic shifts is required to be greater than or equal to M. It may be understood that the difference between the cyclic shifts herein may be an actual difference between the cyclic shifts, or may be an absolute value of the actual difference between the cyclic shifts.

For example, the network device configures M=1. In addition, the network device configures four first reference signals that are a first reference signal 1, a first reference signal 2, a first reference signal 3, and a first reference signal 4. The first reference signal 1 corresponds to a cyclic shift 1, the first reference signal 2 corresponds to a cyclic shift 2, the first reference signal 3 corresponds to a cyclic shift 3, and the first reference signal 4 corresponds to a cyclic shift 4. The network device may configure the cyclic shift 1 to 2, the cyclic shift 2 to 3, the cyclic shift 3 to 5, and the cyclic shift 4 to 7. Therefore, a difference between the cyclic shift 1 and the cyclic shift 2 is 1, a difference between the cyclic shift 1 and the cyclic shift 3 is 3, a difference between the cyclic shift 1 and the cyclic shift 4 is 6, a difference between the cyclic shift 2 and the cyclic shift 3 is 2, and a difference between the cyclic shift 3 and the cyclic shift 4 is 2. Because M=1, it can be learned that cyclic shifts of the four first reference signals configured by the network device satisfy a requirement.

A value of M may be determined in one of the following manners:
1. The value of M is a predefined value.

For example, the value of M is preconfigured by the network device for the terminal device, the value of M is preconfigured in the terminal device, or the value of M may be specified in a protocol. For example, the value of M is a value obtained by dividing a configurable maximum quantity of cyclic shifts by 2, or M may be another value. Certainly, if M=Configurable maximum quantity of cyclic shifts/2, it indicates that a maximum quantity that is of first reference signals on a same comb of a same symbol and that is configured by the network device is 2. During detection, the terminal device is required to set only two detection windows.

The configurable maximum quantity of cyclic shifts is related to a comb. For example, if Comb=2, the configurable maximum quantity of cyclic shifts is 8; if Comb=4, the configurable maximum quantity of cyclic shifts is 12.

2. The value of M is determined based on a maximum timing error that can be processed by the terminal device. In other words, the value of M is related to the maximum timing error that can be processed by the terminal device.

For example, timing determined by the terminal device for the first reference signal (in other words, timing determined for a signal from the another device) may be relatively accurate, or may not be accurate enough, that is, there may be a timing error. Generally, if a timing error determined by the terminal device is less than or equal to the maximum timing error that can be processed by the terminal device, although there is an error of time at which the first reference signal arrives relative to the timing determined by the terminal device, the terminal device can still receive and normally measure the first reference signal and satisfy a corresponding measurement indicator requirement. However, if the timing error determined by the terminal device is greater than the maximum timing error that can be processed by the terminal device, the terminal device may not be able to normally receive or normally process the first reference signal. Therefore, the value of M may be determined based on the maximum timing error that can be processed by the terminal device.

The maximum timing error that can be processed by the terminal device is, for example, a length of a cyclic prefix (cyclic prefix, CP), or may be another length. For example, the maximum timing error that can be processed by the terminal device is the length of the CP, and time resolution corresponding to a single cyclic shift is f. In this case, M may be equal to G/f, and G represents the length of the CP. For a comb, when a quantity of detection windows is a maximum quantity, a length of a detection window represents time resolution of a cyclic shift corresponding to the detection window. For example, if Comb=2, a quantity of cyclic shifts is 8, and the maximum quantity of detection windows is 8. In this case, the terminal device sets eight detection windows, each detection window corresponds to one cyclic shift, and a length of a detection window is time resolution of a cyclic shift corresponding to the detection window.

3. The value of M is determined based on a frequency range to which a frequency of the serving cell of the terminal device belongs. In other words, the value of M is related to the frequency range to which the frequency of the serving cell of the terminal device belongs.

Frequencies may be divided into different ranges. For example, in a division manner at a relatively coarse granularity, the frequencies are divided into a high frequency and a low frequency. For example, a frequency greater than or equal to 6 GHz is a high frequency, and a frequency less than 6 GHz is a low frequency. For the high frequency, a radius of a cell is smaller. Therefore, when the terminal device receives a first reference signal from the another device, an error of actual receiving time relative to the timing determined by the terminal device for the first reference signal may also be smaller. In this case, even if the terminal device sets a length of a detection window to be smaller, a possibility that the first reference signal falls within a detection window corresponding to another cyclic shift is smaller, and the terminal device may be able to normally receive the first reference signal from the another device. Therefore, in this case, M may be set to be smaller, so that the terminal device can receive more first reference signals as much as possible, to improve measurement accuracy. For example, M=2.

For the low frequency, the radius of the cell is larger. Therefore, when the terminal device receives the first reference signal from the another device, the error of the actual receiving time relative to the timing determined by the terminal device for the first reference signal may also be larger. In this case, if the terminal device sets the length of the detection window to be smaller, a receiving error may occur. For example, the first reference signal may fall outside the detection window, or a plurality of first reference signals may be overlap. Therefore, in this case, M may be set to be larger, so that the terminal device can improve measurement accuracy. For example, M=4.

Certainly, the frequency division manner herein is merely an example. During actual application, the frequencies may be further divided into more ranges, and values of N corresponding to different frequency ranges may be different. A division point of 6 GHz is merely an example. Even if the frequencies are divided into only two ranges, another division point may be selected. Naturally, the value of M is also merely an example, and is not specifically limited thereto.

4. The value of M is determined based on a subcarrier spacing of the serving cell of the terminal device. In other words, the value of M is related to the subcarrier spacing of the serving cell of the terminal device.

Lengths of a time domain symbol vary with different subcarrier spacings. Therefore, the value of M may alternatively be determined based on the subcarrier spacing of the serving cell of the terminal device.

The foregoing describes several manners of determining the value of M. During actual application, which manner is selected may be configured by the network device, or may be specified in the protocol. In addition, a manner of determining the value of M is not limited in this embodiment of this application. For example, in addition to the foregoing several determining manners, other possible manners of determining the value of M also fall within the protection scope of this embodiment of this application.

S42: The network device sends the measurement configuration information to the terminal device, and the terminal device receives the measurement configuration information from the network device, where the measurement configuration information is used to indicate the terminal device to measure the plurality of first reference signals.

After determining the measurement configuration information, the network device may send the measurement configuration information to the terminal device.

The value of M may be determined by the network device, and the network device may send the value of M to the terminal device after determining the value of M. For example, the network device sends a first message to the terminal device, the terminal device receives the first message from the network device, where the first message is used to indicate the value of M. For example, in addition to indicating the value of M, the first message may further carry the measurement configuration information in S42. This is equivalent to that the network device may send both the measurement configuration information and the value of M to the terminal device by using the first message. Alternatively, the first message merely indicates a value of M, and the measurement configuration information in S42 is carried in another message. In other words, the network device may alternatively send the measurement configuration information and the value of M to the terminal device by using different messages. If the network device sends the measurement configuration information and the value of M to the terminal device by using the different messages, the network device may first send the measurement configuration information and then send the value of M, first send the value of M and then send the measurement configuration information, or send the measurement configuration information and the value of M simultaneously.

Alternatively, the network device may determine the value of M, the terminal device may also determine the value of M, and the network device is not required to send the value of M to the terminal device. Both the network device and the terminal device may use one of the several determining manners in S41 when determining the value of M, and determining manners used by the network device and the terminal device should be the same, so that values of M determined by the network device and the terminal device are the same.

S43: The terminal device measures the plurality of first reference signals based on the measurement configuration information when the terminal device determines that the smallest value in the differences between the plurality of cyclic shifts corresponding to the plurality of first reference signals is greater than or equal to M.

The terminal device expects that the smallest value in the differences between the plurality of cyclic shifts corresponding to the plurality of first reference signals configured by the network device is greater than or equal to M, but the terminal device does not determine initially whether the network device uses such a configuration. Therefore, the terminal device may first determine whether the smallest value in the differences between the plurality of cyclic shifts corresponding to the plurality of first reference signals is greater than or equal to M. If the smallest value in the differences between the plurality of cyclic shifts corresponding to the plurality of first reference signals is less than M, the terminal device may not measure (in other words, the terminal device does not expect (not expected) to measure, or the terminal device does not require (not required) to measure) the plurality of first reference signals. In other words, the terminal device may not measure the plurality of first reference signals as long as one of the differences between the plurality of cyclic shifts corresponding to the plurality of first reference signals is less than M.

However, if the terminal device determines that the smallest value in the differences between the plurality of cyclic shifts corresponding to the plurality of first reference signals is greater than or equal to M, the terminal device may measure the plurality of first reference signals based on the measurement configuration information.

If the smallest value in the differences between the cyclic shifts is not limited, the terminal device can perform detection only in a worst case, that is, a detection window corresponding to each cyclic shift is the time resolution (a minimum of 1/48 of a time domain symbol) of the single cyclic shift. Consequently, the terminal device may omit detecting or falsely detect the first reference signals, resulting in lower measurement accuracy. However, according to the method provided in this embodiment of this application, a minimum distance between the cyclic shifts of the plurality of first reference signals on the same time domain symbol and on the same comb is defined, and the terminal device may correspondingly adjust, during detection, a size of the detection window corresponding to the cyclic shift, so that the measured first reference signals can fall into corresponding detection windows as much as possible, to improve measurement accuracy.

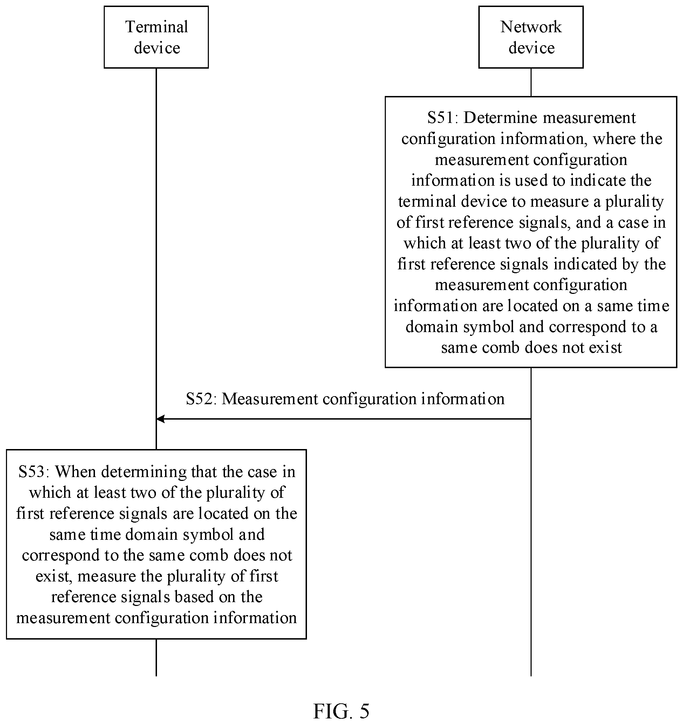

Alternatively, to resolve a problem the same as the problem to be resolved in the embodiment shown in FIG. 4, an embodiment of this application provides a third communication method. According to the method, a problem of a detection error caused by improper setting of a detection window can be resolved. FIG. 5 is a flowchart of the method. In the following description process, an example in which the method is applied to the network architecture shown in FIG. 2 is used. In addition, the method may be performed by two communication apparatuses. The two communication apparatuses are, for example, a first communication apparatus and a second communication apparatus. The first communication apparatus may be a network device or a communication apparatus that can support a function required by the network device to implement the method. Alternatively, the first communication apparatus may be a terminal device or a communication apparatus that can support a function required by the terminal device to implement the method. Certainly, the first communication apparatus may alternatively be another communication apparatus such as a chip system. Similarly, the second communication apparatus may be a network device or a communication apparatus that can support a function required by the network device to implement the method, or the second communication apparatus may be a terminal device or a communication apparatus that can support a function required by the terminal device to implement the method. Certainly, the second communication apparatus may alternatively be another communication apparatus such as a chip system. In addition, implementations of both the first communication apparatus and the second communication apparatus are not limited. For example, the first communication apparatus may be a network device, and the second communication apparatus is a terminal device; both the first communication apparatus and the second communication apparatus are network devices; both the first communication apparatus and the second communication apparatus are terminal devices; or the first communication apparatus is a network device, and the second communication apparatus is a communication apparatus that can support a function required by a terminal device to implement the method. The network device is, for example, a base station.

For ease of description, the following uses an example in which the method is performed by a network device and a terminal device. In other words, an example in which the first communication apparatus is the network device and the second communication apparatus is the terminal device is used. If this embodiment is applied to the network architecture shown in FIG. 2, a network device described below may be the network device in the network architecture shown in FIG. 2, and a terminal device described below may be the terminal device in the network architecture shown in FIG. 2. Another device described below may be a terminal device, for example, the terminal device located in the neighboring cell of the serving cell of the terminal device shown in FIG. 2, or may be a network device, for example, the another network device not drawn in FIG. 2. The neighboring cell of the serving cell may be provided by the network device shown in FIG. 2, or may be provided by the another network device not drawn in FIG. 2.

S51: The network device determines measurement configuration information, where the measurement configuration information is used to indicate the terminal device to measure a plurality of first reference signals, and a case in which at least two of the plurality of first reference signals indicated by the measurement configuration information are located on a same time domain symbol and correspond to a same comb does not exist.

The first reference signal may be a reference signal used by the terminal device to perform measurement. The first reference signal is, for example, an SRS, or may be another reference signal, for example, a CSI-RS. This is not specifically limited. There may be a plurality of reference signals, but only a reference signal used by the terminal device in this embodiment of this application to perform measurement is referred to as the first reference signal. Correspondingly, it may be understood that a measurement process in this embodiment of this application corresponds to the first reference signal. In other words, in the measurement process, the terminal device is required to measure the first reference signal. For example, if the network device configures the terminal device to measure a reference signal 1, and the terminal device may receive the reference signal 1 and a reference signal 2, but the network device does not configure the terminal device to measure the reference signal 2, the reference signal 1 is the first reference signal, and the reference signal 2 is not the first reference signal.

The first reference signal may be sent by a first device. Certainly, if there are a plurality of first reference signals, the plurality of first reference signals may come from at least one first device. The first device may be a terminal device, or may be a network device or the like. A type of the first device is not limited.

That a case in which at least two of the plurality of first reference signals indicated by the measurement configuration information are located on a same time domain symbol and correspond to a same comb does not exist may alternatively be described as that there is no other first reference signal on a time domain symbol on which each of the plurality of first reference signals indicated by the measurement configuration information is located and on a comb corresponding to each of the plurality of first reference signals indicated by the measurement configuration information.

The network device may configure the terminal device to perform measurement. The measurement is, for example, CLI measurement, or may be other measurement. The first reference signal is, for example, an SRS, or may be another reference signal, for example, a CSI-RS. This is not specifically limited. The first reference signal may be sent by the first device. Certainly, if there are the plurality of first reference signals, the plurality of first reference signals may come from the at least one first device. The first device may be a terminal device, or may be a network device or the like. The type of the first device is not limited.

As described above, if the network device configures a plurality of terminal devices to send SRSs on a same comb of a same symbol, cyclic shifts that are of SRSs and that are used by different terminal devices are separately configured by the network device. The terminal device does not know a configuration of an SRS sent by another terminal device. In addition, there is no limitation when the network device configures the cyclic shifts of the SRSs of the different terminal devices. In this way, the terminal device can set detection windows based only on a maximum quantity, and a length of the detection window is relatively small. Consequently, there is a relatively high possibility that the terminal device incorrectly detects or omits detecting a reference signal bandwidth. Therefore, in this embodiment of this application, the network device may configure that a case in which two of the plurality of first reference signals are located on a same time domain symbol and correspond to a same comb does not exist. In other words, any two of the plurality of first reference signals configured by the network device correspond to different time domain symbols, any two of the plurality of first reference signals configured by the network device correspond to different combs, or any two of the plurality of first reference signals configured by the network device correspond to both the different time domain symbols and the different combs. In this manner, a possible problem is avoided, and accuracy of detection of the terminal device is improved.

For example, the network device configures four first reference signals that are a first reference signal 1, a first reference signal 2, a first reference signal 3, and a first reference signal 4. The first reference signal 1 corresponds to a time domain symbol 1, the first reference signal 2 corresponds to a time domain symbol 2, the first reference signal 3 corresponds to the time domain symbol 2, and the first reference signal 4 corresponds to a time domain symbol 3. The first reference signal 1 corresponds to a comb 1, the first reference signal 2 corresponds to a comb 2, the first reference signal 3 corresponds to the comb 1, and the first reference signal 4 corresponds to the comb 2. It can be learned that the first reference signal 1 and the first reference signal 3 correspond to a same comb, but correspond to different time domain symbols, and the first reference signal 2 and the first reference signal 3 correspond to a same time domain symbol, but correspond to different combs. In other words, a case in which two first reference signals are located on a same time domain symbol and correspond to a same comb does not exist.

In an optional implementation, the measurement configuration information may indicate the terminal device to measure the plurality of first reference signals, and may further indicate the terminal device to measure a plurality of second reference signals, where the plurality of second reference signals are located on a same time domain symbol and correspond to a same comb.

The second reference signal may also be a reference signal used by the terminal device to perform measurement. The second reference signal is, for example, an SRS, or may be another reference signal, for example, a CSI-RS. This is not specifically limited. There may be a plurality of reference signals, but only a reference signal used by the terminal device in this embodiment of this application to perform measurement is referred to as the first reference signal or the second reference signal. In other words, in the measurement process, the terminal device is required to measure the first reference signal or measure the first reference signal and the second reference signal.

The second reference signal may be sent by a second device. Certainly, if there are a plurality of second reference signals, the plurality of second reference signals may come from at least one second device. The second device may be a terminal device, or may be a network device or the like. A type of the second device is not limited. In addition, the type of the first device and the type of the second device may be the same. For example, both the first device and the second device are terminal devices. Alternatively, the type of the first device and the type of the second device may be different. For example, the first device is a terminal device, and the second device is a network device. In addition, a same device may be able to send both the first reference signal and the second reference signal. In this case, the device may be used as the first device, or may be used as the second device.

For example, the network device further configures two second reference signals that are a second reference signal 1 and a second reference signal 2. The second reference signal 1 corresponds to a time domain symbol 1, the second reference signal 2 corresponds to the time domain symbol 1, the second reference signal 1 corresponds to a comb 1, and the second reference signal 2 also corresponds to the comb 1. It can be learned that the second reference signal 1 and the second reference signal 2 correspond to a same time domain symbol, and correspond to a same comb.

S52: The network device sends the measurement configuration information to the terminal device, and the terminal device receives the measurement configuration information from the network device, where the measurement configuration information is used to indicate the terminal device to measure the plurality of reference signals.

After determining the measurement configuration information, the network device may send the measurement configuration information to the terminal device.

S53: When the terminal device determines that the case in which at least two of the plurality of first reference signals are located on the same time domain symbol and correspond to the same comb does not exist, the terminal device measures the plurality of first reference signals based on the measurement configuration information.

That the terminal device determines that the case in which at least two of the plurality of first reference signals are located on the same time domain symbol and correspond to the same comb does not exist may alternatively be described as that the terminal device determines that there is no other first reference signal on the time domain symbol on which each of the plurality of first reference signals is located and on the comb corresponding to each of the plurality of first reference signals.

The terminal device expects that the case in which at least two of the plurality of first reference signals configured by the network device are located on the same time domain symbol and correspond to the same comb does not exist. However, the terminal device does not determine initially whether the network device uses such a configuration. Therefore, the terminal device may first determine whether the case in which at least two of the plurality of first reference signals are located on the same time domain symbol and correspond to the same comb does not exist. If the terminal device determines that the case in which at least two of the plurality of first reference signals are located on the same time domain symbol and correspond to the same comb does not exist, the terminal device may measure the plurality of reference signals based on the measurement configuration information.

If the network device further configures the plurality of second reference signals by using the measurement configuration information, the terminal device may determine whether a case in which at least two of the plurality of second reference signals are located on a same time domain symbol and correspond to a same comb does not exist. However, because the plurality of second reference signals configured by the network device are located on the same time domain symbol and correspond to the same comb, a determining result of the terminal device is that the plurality of second reference signals are located on the same time domain symbol and correspond to the same comb. In this case, the terminal device may not measure a plurality of second reference signals, to reduce a measurement error.

According to the method provided in this embodiment of this application, the case in which two of the plurality of first reference signals configured by the network device are located on the same time domain symbol and correspond to the same comb does not exist. This is equivalent to fundamentally resolving a problem of falsely detecting or omitting detecting the reference signals by the terminal device, and helps improve measurement accuracy of the terminal device.

The following describes, with reference to the accompanying drawings, apparatuses configured to implement the foregoing methods in the embodiments of this application. Therefore, all the foregoing content may be used in subsequent embodiments, and repeated content is not described again.

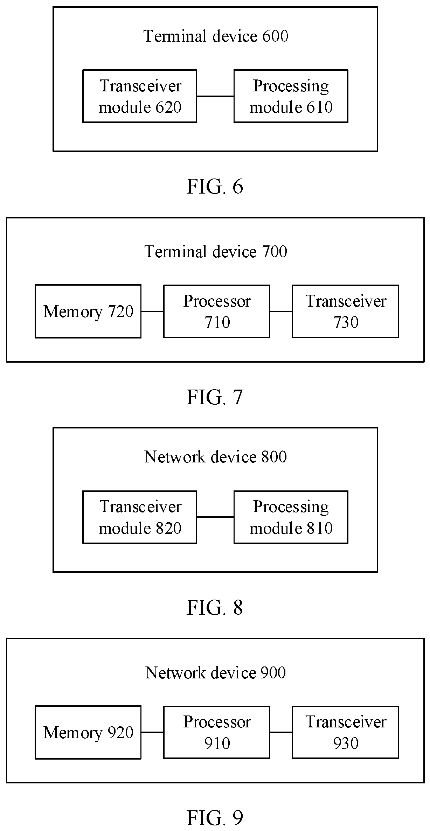

FIG. 6 is a schematic block diagram of a communication device 600 according to an embodiment of this application. For example, the communication device 600 is a terminal device 600. The terminal device 600 includes a processing module 610 and a transceiver module 620. The processing module 610 may be configured to perform all operations performed by the terminal device in the embodiment shown in FIG. 3 except sending and/or receiving operations, for example, S31, and/or configured to support another process of the technology described in this specification. The transceiver module 620 may be configured to perform all sending and/or receiving operations performed by the terminal device in the embodiment shown in FIG. 3, for example, S33 and S34, and/or configured to support another process of the technology described in this specification.

The processing module 610 is configured to determine whether the terminal device supports sending and/or receiving of a signal other than a first reference signal in a measurement process, where the first reference signal is used by the terminal device 600 to perform measurement in the measurement process.

The transceiver module 620 is configured to receive only the first reference signal within a first time domain range when the processing module 610 determines that the terminal device does not support sending and/or receiving of the signal other than the first reference signal in the measurement process, where the first time domain range includes a first time domain symbol and a second time domain symbol, the first time domain symbol is a time domain symbol configured by a network device, the second time domain symbol includes N time domain symbols before the first time domain symbol and/or N time domain symbols after the first time domain symbol, and N is a positive integer.

In an optional implementation, a value of N is a predefined value; the value of N is determined based on a subcarrier spacing of a serving cell of the terminal device 600; the value of N is determined based on a frequency range to which a frequency of the serving cell of the terminal device 600 belongs; the value of N is determined based on a timing advance of the terminal device 600 in the serving cell; or the value of N is determined based on a largest value in timing advances used when the terminal device 600 measures the first reference signal.

In an optional implementation, the transceiver module 620 is further configured to receive a first message from the network device, where the first message is used to indicate a value of N.

In an optional implementation, the transceiver module 620 is further configured to send a second message to the network device, where the second message is used to indicate the value of N.

In an optional implementation, the transceiver module 620 is further configured to send a second message to the network device, where the second message is used to indicate the largest value in the timing advances used when the terminal device 600 measures the first reference signal.

In an optional implementation, the transceiver module 620 is further configured to: when the processing module 610 determines that the terminal device 600 supports sending and/or receiving of the signal other than the first reference signal in the measurement process, and the processing module 610 determines not to use a beam sweeping manner in the measurement process, receive, within the first time domain range, the first reference signal, and sending and/or receiving a first signal, where the first signal is a signal other than the first reference signal.

In an optional implementation, the transceiver module 620 is further configured to receive only the first reference signal within the first time domain range when the processing module 610 determines that the terminal device 600 supports sending and/or receiving of the signal other than the first reference signal in the measurement process, and the processing module 610 determines to use a beam sweeping manner in the measurement process.

In an optional implementation, the transceiver module 620 is further configured to send capability information of the terminal device 600 to the network device, where the capability information is used to indicate whether the terminal device 600 supports sending and/or receiving of the signal other than the first reference signal in the measurement process.

It should be understood that the processing module 610 in this embodiment of this application may be implemented by a processor or a processor-related circuit component, and the transceiver module 620 may be implemented by a transceiver or a transceiver-related circuit component.

As shown in FIG. 7, an embodiment of this application further provides a communication device 700. For example, the communication device 700 is a terminal device 700. The terminal device 700 includes a processor 710, a memory 720, and a transceiver 730. The memory 720 stores instructions or a program. The processor 710 is configured to execute the instructions or the program stored in the memory 720. When the instructions or the program stored in the memory 720 is executed, the processor 710 is configured to perform an operation performed by the processing module 610 in the foregoing embodiment, and the transceiver 730 is configured to perform an operation performed by the transceiver module 620 in the foregoing embodiment.

It should be understood that the terminal device 600 or the terminal device 700 in the embodiments of this application may correspond to the terminal device in the embodiment shown in FIG. 3, and operations and/or functions of the modules in the terminal device 600 or the terminal device 700 are intended to implement corresponding procedures in the embodiment shown in FIG. 3. For brevity, details are not described herein again.

FIG. 8 is a schematic block diagram of a communication device 800 according to an embodiment of this application. For example, the communication device 800 is a network device 800. The network device 800 includes a processing module 810 and a transceiver module 820. The processing module 810 may be configured to perform all operations performed by the network device in the embodiment shown in FIG. 3 except sending and/or receiving operations, for example, S32, and/or configured to support another process of the technology described in this specification. The transceiver module 820 may be configured to perform all sending and/or receiving operations performed by the network device in the embodiment shown in FIG. 3, for example, S33 and S34, and/or configured to support another process of the technology described in this specification.

The processing module 810 is configured to determine whether a terminal device supports sending and/or receiving of a signal other than a first reference signal in a measurement process, where the first reference signal is used by the terminal device to perform measurement in the measurement process.

The transceiver module 820 is configured to skip sending the signal other than the first reference signal to the terminal device within a first time domain range when the processing module 810 determines that the terminal device does not support sending and/or receiving of the signal other than the first reference signal in the measurement process, where the first time domain range includes a first time domain symbol and a second time domain symbol, the first time domain symbol is a time domain symbol configured by the network device 800, the second time domain symbol includes N time domain symbols before the first time domain symbol and/or N time domain symbols after the first time domain symbol, and N is a positive integer.

In an optional implementation, a value of N is a predefined value; the value of N is determined based on a subcarrier spacing of a serving cell of the terminal device; the value of N is determined based on a frequency range to which a frequency of the serving cell of the terminal device belongs; the value of N is determined based on a timing advance of the terminal device in the serving cell of the terminal device; or the value of N is determined based on a largest value in timing advances used when the terminal device measures the first reference signal.

In an optional implementation, the transceiver module 820 is further configured to receive a second message from the terminal device, where the second message is used to indicate the value of N.

In an optional implementation, the transceiver module 820 is further configured to send a first message to the terminal device, where the first message is used to indicate the value of N.

In an optional implementation, the transceiver module 820 is further configured to send the first message to the terminal device, where the first message is used to indicate the largest value in the timing advances used when the terminal device measures the first reference signal.

In an optional implementation, the transceiver module 820 is further configured to: when the processing module 810 determines that the terminal device supports sending and/or receiving of the signal other than the first reference signal in the measurement process, and the processing module 810 determines that the terminal device does not use a beam sweeping manner in the measurement process, send, within the first time domain range, the first reference signal to the terminal device, and receiving and/or sending a first signal to the terminal device, where the first signal is a signal other than the first reference signal.

In an optional implementation, the transceiver module 820 is further configured to send only the first reference signal within the first time domain range when the processing module 810 determines that the terminal device supports sending and/or receiving of the signal other than the first reference signal in the measurement process, and the processing module 810 determines that the terminal device uses a beam sweeping manner in the measurement process.

In an optional implementation, the processing module 810 is configured to determine, in the following manner, whether the terminal device supports sending and/or receiving of the signal other than the first reference signal in the measurement process:
obtaining capability information of the terminal device received by the transceiver module 820 from the terminal device; and
determining, based on the capability information, whether the terminal device supports sending and/or receiving of the signal other than the first reference signal in the measurement process.

It should be understood that the processing module 810 in this embodiment of this application may be implemented by a processor or a processor-related circuit component, and the transceiver module 820 may be implemented by a transceiver or a transceiver-related circuit component.

As shown in FIG. 9, an embodiment of this application further provides a communication device 900. For example, the communication device 900 is a network device 900. The network device 900 includes a processor 910, a memory 920, and a transceiver 930. The memory 920 stores instructions or a program. The processor 910 is configured to execute the instructions or the program stored in the memory 920. When the instructions or the program stored in the memory 920 is executed, the processor 910 is configured to perform an operation performed by the processing module 810 in the foregoing embodiment, and the transceiver 930 is configured to perform an operation performed by the transceiver module 820 in the foregoing embodiment.

It should be understood that the network device 800 or the network device 900 according to the embodiments of this application may correspond to the network device in the embodiment shown in FIG. 3, and operations and/or functions of modules in the network device 800 or the network device 900 are separately used to implement corresponding procedures in the embodiment shown in FIG. 3. For brevity, details are not described herein again.

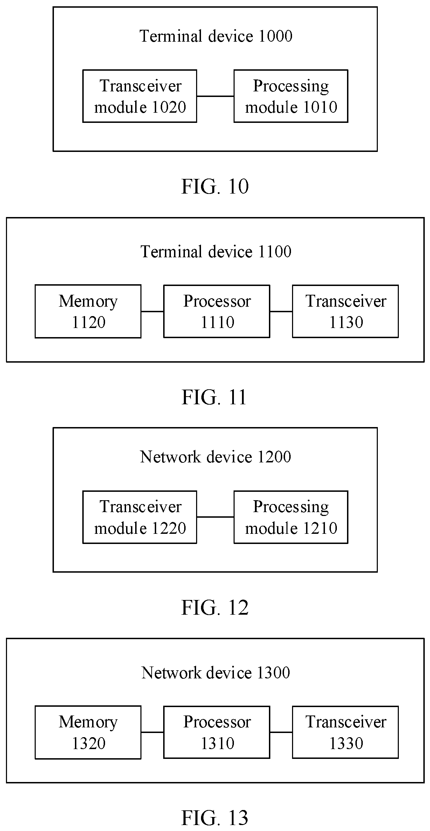

FIG. 10 is a schematic block diagram of a communication device 1000 according to an embodiment of this application. For example, the communication device 1000 is a terminal device 1000. The terminal device 1000 includes a processing module 1010 and a transceiver module 1020. The processing module 1010 may be configured to perform all operations performed by the terminal device in the embodiment shown in FIG. 4 except sending and/or receiving operations, for example, S43, and/or configured to support another process of the technology described in this specification. The transceiver module 1020 may be configured to perform all sending and/or receiving operations performed by the terminal device in the embodiment shown in FIG. 4, for example, S42, and/or configured to support another process of the technology described in this specification.

The transceiver module 1020 is configured to receive measurement configuration information from a network device, where the measurement configuration information is used to indicate the terminal device 1000 to measure a plurality of first reference signals.

The processing module 1010 is configured to measure the plurality of first reference signals based on the measurement configuration information when determining that a smallest value in differences between a plurality of cyclic shifts corresponding to the plurality of first reference signals is greater than or equal to M.

The plurality of first reference signals are first reference signals located on a same time domain symbol and corresponding to a same comb.

In an optional implementation, a value of M is a predefined value; the value of M is determined based on a maximum timing error that can be processed by the terminal device 1000; the value of M is determined based on a frequency range to which a frequency of a serving cell of the terminal device 1000 belongs; or the value of M is determined based on a subcarrier spacing of the serving cell of the terminal device 1000.

In an optional implementation, the transceiver module 1020 is further configured to receive a first message from the network device, where the first message is used to indicate a value of M.

It should be understood that the processing module 1010 in this embodiment of this application may be implemented by a processor or a processor-related circuit component, and the transceiver module 1020 may be implemented by a transceiver or a transceiver-related circuit component.

As shown in FIG. 11, an embodiment of this application further provides a communication device 1100. For example, the communication device 1100 is a terminal device 1100. The terminal device 1100 includes a processor 1110, a memory 1120, and a transceiver 1130. The memory 1120 stores instructions or a program. The processor 1110 is configured to execute the instructions or the program stored in the memory 1120. When the instructions or the program stored in the memory 1120 is executed, the processor 1110 is configured to perform an operation performed by the processing module 1010 in the foregoing embodiment, and the transceiver 1130 is configured to perform an operation performed by the transceiver module 1020 in the foregoing embodiment.

It should be understood that the terminal device 1000 or the terminal device 1100 in the embodiments of this application may correspond to the terminal device in the embodiment shown in FIG. 4, and operations and/or functions of the modules in the terminal device 1000 or the terminal device 1100 are intended to implement corresponding procedures in the embodiment shown in FIG. 4. For brevity, details are not described herein again.

FIG. 12 is a schematic block diagram of a communication device 1200 according to an embodiment of this application. For example, the communication device 1200 is a network device 1200. The network device 1200 includes a processing module 1210 and a transceiver module 1220. The processing module 1210 may be configured to perform all operations performed by the network device in the embodiment shown in FIG. 4 except sending and/or receiving operations, for example, S41, and/or configured to support another process of the technology described in this specification. The transceiver module 1220 may be configured to perform all sending and/or receiving operations performed by the network device in the embodiment shown in FIG. 4, for example, S42, and/or configured to support another process of the technology described in this specification.

The processing module 1210 is configured to determine measurement configuration information, where the measurement configuration information is used to indicate a terminal device to measure a plurality of first reference signals, a smallest value in differences between a plurality of cyclic shifts corresponding to the plurality of first reference signals configured by the network device 1200 is greater than or equal to M, and the plurality of first reference signals are first reference signals located on a same time domain symbol and corresponding to a same comb

The transceiver module 1220 is configured to send the measurement configuration information to the terminal device.

In an optional implementation, a value of M is a predefined value; the value of M is determined based on a maximum timing error that can be processed by the terminal device; the value of M is determined based on a frequency range to which a frequency of a serving cell of the terminal device belongs; or the value of M is determined based on a subcarrier spacing of the serving cell of the terminal device.

In an optional implementation, the transceiver module 1220 is further configured to send a first message to the terminal device, where the first message is used to indicate a value of M.

It should be understood that the processing module 1210 in this embodiment of this application may be implemented by a processor or a processor-related circuit component, and the transceiver module 1220 may be implemented by a transceiver or a transceiver-related circuit component.

As shown in FIG. 13, an embodiment of this application further provides a communication device 1300. For example, the communication device 1300 is a network device 1300. The network device 1300 includes a processor 1310, a memory 1320, and a transceiver 1330. The memory 1320 stores instructions or a program. The processor 1310 is configured to execute the instructions or the program stored in the memory 1320. When the instructions or the program stored in the memory 1320 is executed, the processor 1310 is configured to perform an operation performed by the processing module 1210 in the foregoing embodiment, and the transceiver 1330 is configured to perform an operation performed by the transceiver module 1220 in the foregoing embodiment.

It should be understood that the network device 1200 or the network device 1300 according to the embodiments of this application may correspond to the network device in the embodiment shown in FIG. 4, and operations and/or functions of modules in the network device 1200 or the network device 1300 are separately used to implement corresponding procedures in the embodiment shown in FIG. 4. For brevity, details are not described herein again.

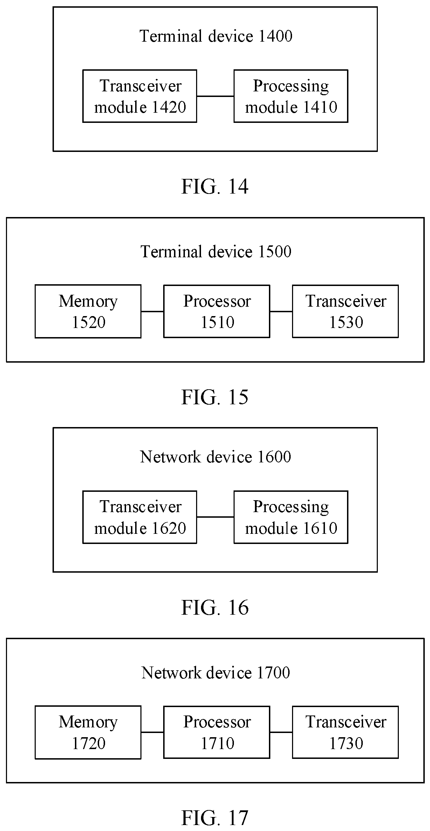

FIG. 14 is a schematic block diagram of a communication device 1400 according to an embodiment of this application. For example, the communication device 1400 is a terminal device 1400. The terminal device 1400 includes a processing module 1410 and a transceiver module 1420. The processing module 1410 may be configured to perform all operations performed by the terminal device in the embodiment shown in FIG. 5 except sending and/or receiving operations, for example, S53, and/or configured to support another process of the technology described in this specification. The transceiver module 1420 may be configured to perform all sending and/or receiving operations performed by the terminal device in the embodiment shown in FIG. 5, for example, S52, and/or configured to support another process of the technology described in this specification.

The transceiver module 1420 is configured to receive measurement configuration information from a network device, where the measurement configuration information is used to indicate the terminal device 1400 to measure a plurality of first reference signals.

The processing module 1410 is configured to determine that a case in which at least two of the plurality of first reference signals are located on a same time domain symbol and correspond to a same comb does not exist.

The terminal device measures the plurality of first reference signals based on the measurement configuration information.

In an optional implementation, the measurement configuration information is further used to indicate the terminal device 1400 to measure a plurality of second reference signals, where the plurality of second reference signals are located on a same time domain symbol and correspond to a same comb.

It should be understood that the processing module 1410 in this embodiment of this application may be implemented by a processor or a processor-related circuit component, and the transceiver module 1420 may be implemented by a transceiver or a transceiver-related circuit component.

As shown in FIG. 15, an embodiment of this application further provides a communication device 1500. For example, the communication device 1500 is a terminal device 1500. The terminal device 1500 includes a processor 1510, a memory 1520, and a transceiver 1530. The memory 1520 stores instructions or a program. The processor 1510 is configured to execute the instructions or the program stored in the memory 1520. When the instructions or the program stored in the memory 1520 is executed, the processor 1510 is configured to perform an operation performed by the processing module 1410 in the foregoing embodiment, and the transceiver 1530 is configured to perform an operation performed by the transceiver module 1420 in the foregoing embodiment.

It should be understood that the terminal device 1400 or the terminal device 1500 in the embodiments of this application may correspond to the terminal device in the embodiment shown in FIG. 5, and operations and/or functions of the modules in the terminal device 1400 or the terminal device 1500 are intended to implement corresponding procedures in the embodiment shown in FIG. 5. For brevity, details are not described herein again.

FIG. 16 is a schematic block diagram of a communication device 1600 according to an embodiment of this application. For example, the communication device 1600 is a network device 1600. The network device 1600 includes a processing module 1610 and a transceiver module 1620. The processing module 1610 may be configured to perform all operations performed by the network device in the embodiment shown in FIG. 5 except sending and/or receiving operations, for example, S51, and/or configured to support another process of the technology described in this specification. The transceiver module 1620 may be configured to perform all sending and/or receiving operations performed by the network device in the embodiment shown in FIG. 5, for example, S52, and/or configured to support another process of the technology described in this specification.

The processing module 1610 is configured to determine measurement configuration information, where the measurement configuration information is used to indicate a terminal device to measure a plurality of first reference signals, and a case in which at least two of the plurality of first reference signals indicated by the measurement configuration information are located on a same time domain symbol and correspond to a same comb does not exist.

The transceiver module 1620 is configured to send the measurement configuration information to the terminal device.

In an optional implementation, the measurement configuration information is further used to indicate the terminal device to measure a plurality of second reference signals, where the plurality of second reference signals are located on a same time domain symbol and correspond to a same comb.

It should be understood that the processing module 1610 in this embodiment of this application may be implemented by a processor or a processor-related circuit component, and the transceiver module 1620 may be implemented by a transceiver or a transceiver-related circuit component.

As shown in FIG. 17, an embodiment of this application further provides a communication device 1700. For example, the communication device 1700 is a network device 1700. The network device 1700 includes a processor 1710, a memory 1720, and a transceiver 1730. The memory 1720 stores instructions or a program. The processor 1710 is configured to execute the instructions or the program stored in the memory 1720. When the instructions or the program stored in the memory 1720 is executed, the processor 1710 is configured to perform an operation performed by the processing module 1610 in the foregoing embodiment, and the transceiver 1730 is configured to perform an operation performed by the transceiver module 1620 in the foregoing embodiment.

It should be understood that the network device 1600 or the network device 1700 according to the embodiments of this application may correspond to the network device in the embodiment shown in FIG. 5, and operations and/or functions of modules in the network device 1600 or the network device 1700 are separately used to implement corresponding procedures in the embodiment shown in FIG. 5. For brevity, details are not described herein again.

An embodiment of this application further provides a communication apparatus. The communication apparatus may be a terminal device, or may be a circuit. The communication apparatus may be configured to perform actions performed by the terminal device in the method embodiment shown in FIG. 3, the method embodiment shown in FIG. 4, or the method embodiment shown in FIG. 5.

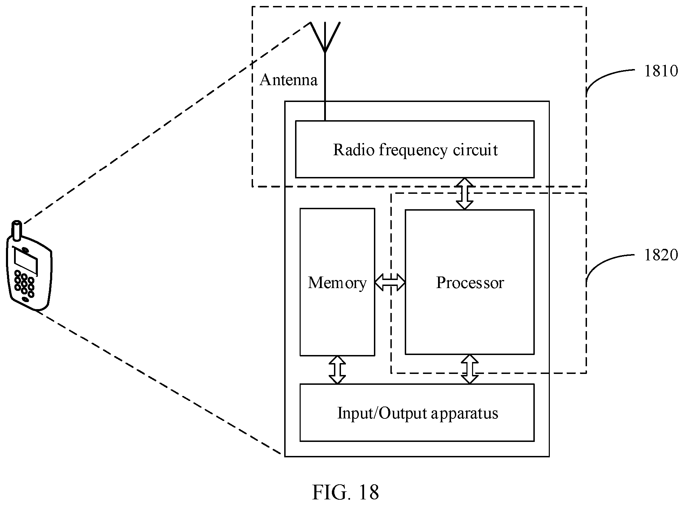

When the communication apparatus is a terminal device, FIG. 18 is a simplified schematic structural diagram of the terminal device. For ease of understanding and illustration, an example in which the terminal device is a mobile phone is used in FIG. 18. As shown in FIG. 18, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to send and/or receive a radio frequency signal in an electromagnetic wave form. The input/output apparatus, such as a touchscreen, a display, or a keyboard, is mainly configured to: receive data entered by a user, and output data to the user. It should be noted that some types of terminal devices may have no input/output apparatus.

When data is required to be sent, after performing baseband processing on the to-be-sent data, the processor outputs a baseband signal to the radio frequency circuit. After performing radio frequency processing on the baseband signal, the radio frequency circuit sends a radio frequency signal to the outside in an electromagnetic wave form through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 18 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have sending and/or receiving functions may be considered as a transceiver unit of the terminal device, and the processor that has a processing function may be considered as a processing unit of the terminal device. As shown in FIG. 18, the terminal device includes a transceiver unit 1810 and a processing unit 1820. The transceiver unit may also be referred to as a transceiver, a transceiver apparatus, or the like. The processing unit may also be referred to as a processor, a processing board, a processing module, a processing apparatus, or the like. Optionally, a component that is in the transceiver unit 1810 and that is configured to implement a receiving function may be considered as a receiving unit, and a component that is in the transceiver unit 1810 and that is configured to implement a sending function may be considered as a sending unit. That is, the transceiver unit 1810 includes the receiving unit and the sending unit. The transceiver unit sometimes may also be referred to as a transceiver, a transceiver circuit, or the like. The receiving unit sometimes may also be referred to as a receiver, a receiving circuit, or the like. The sending unit sometimes may also be referred to as a transmitter, a transmitting circuit, or the like.

It should be understood that the transceiver unit 1810 is configured to perform the sending and/or receiving operations on a terminal device side in the foregoing method embodiment shown in FIG. 3, and the processing unit 1820 is configured to perform the operation other than the sending and/or receiving operations on the terminal device side in the foregoing method embodiment shown in FIG. 3.

For example, in an implementation, the transceiver unit 1810 is configured to perform the sending and/or receiving steps on the terminal device side in the embodiment shown in FIG. 3, for example, S33 and S34, and/or configured to support another process of the technology described in this specification. The processing unit 1820 is configured to perform an operation on the terminal device side in the embodiment shown in FIG. 3 except the sending and/or receiving operations, for example, S31, and/or configured to support another process of the technology described in this specification.

Alternatively, the transceiver unit 1810 is configured to perform the sending and receiving operations on a terminal device side in the foregoing method embodiment shown in FIG. 4, and the processing unit 1820 is configured to perform the operation other than the sending and/or receiving operations on the terminal device side in the foregoing method embodiment shown in FIG. 4.

For example, in an implementation, the transceiver unit 1810 is configured to perform the sending and/or receiving steps on the terminal device side in the embodiment shown in FIG. 4, for example, S43, and/or configured to support another process of the technology described in this specification. The processing unit 1820 is configured to perform an operation on the terminal device side in the embodiment shown in FIG. 4 except the sending and/or receiving operations, for example, S42, and/or configured to support another process of the technology described in this specification.

Alternatively, the transceiver unit 1810 is configured to perform the sending and receiving operations on a terminal device side in the foregoing method embodiment shown in FIG. 5, and the processing unit 1820 is configured to perform the operation other than the sending and/or receiving operations on the terminal device side in the foregoing method embodiment shown in FIG. 5.

For example, in an implementation, the transceiver unit 1810 is configured to perform the sending and/or receiving steps on the terminal device side in the embodiment shown in FIG. 5, for example, S53, and/or configured to support another process of the technology described in this specification. The processing unit 1820 is configured to perform an operation on the terminal device side in the embodiment shown in FIG. 5 except the sending and/or receiving operations, for example, S52, and/or configured to support another process of the technology described in this specification.

When the communication apparatus is a chip, the chip includes a transceiver unit and a processing unit. The transceiver unit may be an input/output circuit or a communication interface. The processing unit is a processor, a microprocessor, or an integrated circuit that is integrated on the chip.

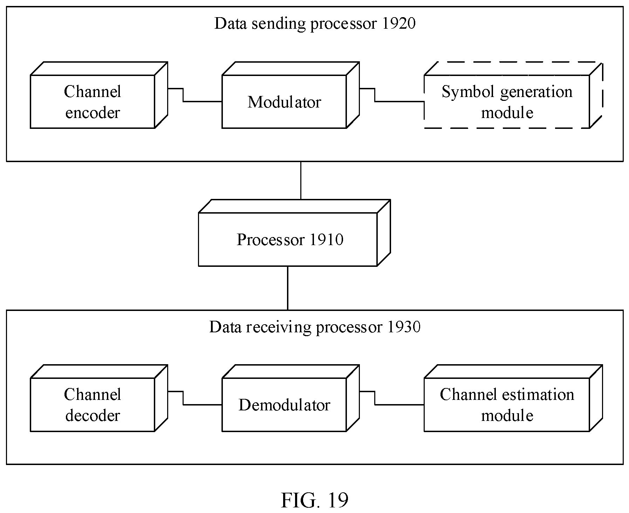

When the communication apparatus in this embodiment of this application is a terminal device, refer to a device shown in FIG. 19. In an example, the device may complete a function similar to that of the processor 1910 in FIG. 19. In FIG. 19, the device includes a processor 1910, a data sending processor 1920, and a data receiving processor 1930. The processing module 610 in the foregoing embodiment may be the processor 1910 in FIG. 19, and completes a corresponding function. The transceiver module 620 in the foregoing embodiment may be the data sending processor 1920 and/or data receiving processor 1930 in FIG. 19. Alternatively, the processing module 1010 in the foregoing embodiment may be the processor 1910 in FIG. 19, and completes a corresponding function. The transceiver module 1020 in the foregoing embodiment may be the data sending processor 1920 and/or data receiving processor 1930 in FIG. 19. Alternatively, the processing module 1410 in the foregoing embodiment may be the processor 1910 in FIG. 19, and completes a corresponding function. The transceiver module 1420 in the foregoing embodiment may be the data sending processor 1920 and/or data receiving processor 1930 in FIG. 19.

Although FIG. 19 shows a channel encoder and a channel decoder, it may be understood that the modules are merely examples, and do not constitute a limitation on this embodiment.

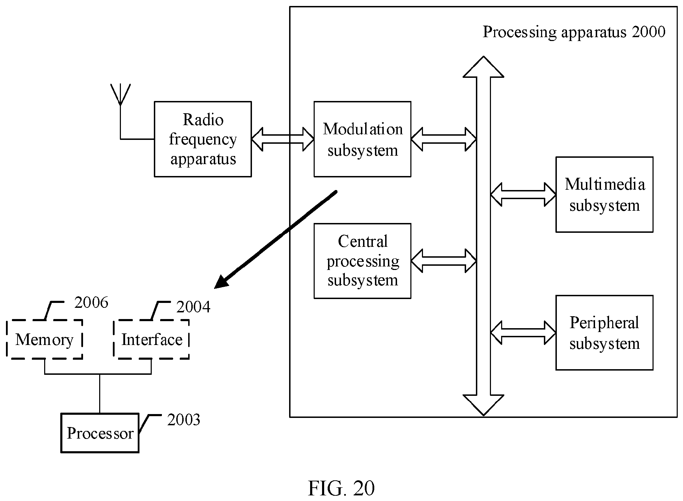

FIG. 20 shows another form of this embodiment. A processing apparatus 2000 includes modules such as a modulation subsystem, a central processing subsystem, and a peripheral subsystem. The communication apparatus in this embodiment may be used as the modulation subsystem in the processing apparatus 2000. Specifically, the modulation subsystem may include a processor 2003 and an interface 2004. The processor 2003 implements a function of the processing module 610, and the interface 2004 implements a function of the transceiver module 620. Alternatively, the processor 2003 implements a function of the processing module 1010, and the interface 2004 implements a function of the transceiver module 1020. Alternatively, the processor 2003 implements a function of the processing module 1410, and the interface 2004 implements a function of the transceiver module 1420. In another variation, the modulation subsystem includes a memory 2006, the processor 2003, and a program that is stored in the memory 2006 and that can be run on the processor. When executing the program, the processor 2003 implements the method on the terminal device side in the method embodiment shown in FIG. 3, the method embodiment shown in FIG. 4, or the method embodiment shown in FIG. 5. It should be noted that the memory 2006 may be a non-volatile memory, or may be a volatile memory. The memory 2006 may be located in the modulation subsystem, or may be located in the processing apparatus 2000, provided that the memory 2006 can be connected to the processor 2003.

An embodiment of this application further provides a computer-readable storage medium. The computer-readable storage medium stores a computer program. When the program is executed by a processor, a procedure related to the terminal device in the embodiment shown in FIG. 3 provided in the foregoing method embodiments may be implemented.

An embodiment of this application further provides a computer-readable storage medium. The computer-readable storage medium stores a computer program. When the program is executed by a processor, a procedure related to the network device in the embodiment shown in FIG. 3 provided in the foregoing method embodiments may be implemented.

An embodiment of this application further provides a computer-readable storage medium. The computer-readable storage medium stores a computer program. When the program is executed by a processor, a procedure related to the terminal device in the embodiment shown in FIG. 4 provided in the foregoing method embodiments may be implemented.

An embodiment of this application further provides a computer-readable storage medium. The computer-readable storage medium stores a computer program. When the program is executed by a processor, a procedure related to the network device in the embodiment shown in FIG. 4 provided in the foregoing method embodiments may be implemented.

An embodiment of this application further provides a computer-readable storage medium. The computer-readable storage medium stores a computer program. When the program is executed by a processor, a procedure related to the terminal device in the embodiment shown in FIG. 5 provided in the foregoing method embodiments may be implemented.

An embodiment of this application further provides a computer-readable storage medium. The computer-readable storage medium stores a computer program. When the program is executed by a processor, a procedure related to the network device in the embodiment shown in FIG. 5 provided in the foregoing method embodiments may be implemented.

An embodiment of this application further provides a computer program product including instructions. When the instructions are executed, the method on a terminal device side in the method embodiment shown in FIG. 3 is performed.

An embodiment of this application further provides a computer program product including instructions. When the instructions are executed, the method on a network device side in the method embodiment shown in FIG. 3 is performed.

An embodiment of this application further provides a computer program product including instructions. When the instructions are executed, the method on a terminal device side in the method embodiment shown in FIG. 4 is performed.

An embodiment of this application further provides a computer program product including instructions. When the instructions are executed, the method on a network device side in the method embodiment shown in FIG. 4 is performed.

An embodiment of this application further provides a computer program product including instructions. When the instructions are executed, the method on a terminal device side in the method embodiment shown in FIG. 5 is performed.

An embodiment of this application further provides a computer program product including instructions. When the instructions are executed, the method on a network device side in the method embodiment shown in FIG. 5 is performed.

It should be understood that, the processor mentioned in the embodiments of this application may be a central processing unit (central processing unit, CPU), or may be another general purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general purpose processor may be a microprocessor, or the processor may be any conventional processor or the like.

It may be further understood that the memory mentioned in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in the embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual coupling or direct coupling or communication connection may be implemented by using some interfaces. The indirect coupling or communication connection between the apparatuses or units may be implemented in electrical, mechanical, or another form.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of the embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or a compact disc.

Further embodiments of the present invention are provided in the following. It should be noted that the numbering used in the following section does not necessarily need to comply with the numbering used in the previous sections.
Embodiment 1. A communication method, comprising:
   determining, by a terminal device, whether the terminal device supports sending and/or receiving of a signal other than a first reference signal in a measurement process, wherein the first reference signal is used by the terminal device to perform measurement in the measurement process; and
   receiving, by the terminal device, only the first reference signal within a first time domain range when the terminal device does not support sending and/or receiving of the signal other than the first reference signal in the measurement process, wherein the first time domain range comprises a first time domain symbol and a second time domain symbol, the first time domain symbol is a time domain symbol configured by a network device, the second time domain symbol comprises N time domain symbols before the first time domain symbol and/or N time domain
   symbols after the first time domain symbol, and N is a positive integer.
Embodiment 2. The method according to embodiment 1, wherein
   a value of N is a predefined value;
   the value of N is determined based on a subcarrier spacing of a serving cell of the terminal device;
   the value of N is determined based on a frequency range to which a frequency of the serving cell of the terminal device belongs;
   the value of N is determined based on a timing advance of the terminal device in the serving cell; or
   the value of N is determined based on a largest value in timing advances used when the terminal device measures the first reference signal.
Embodiment 3. The method according to embodiment 1, wherein the method further comprises:
   receiving, by the terminal device, a first message from the network device, wherein the first message is used to indicate a value of N.
Embodiment 4. The method according to embodiment 1 or 2, wherein the method further comprises:
   sending, by the terminal device, a second message to the network device, wherein the second message is used to indicate the value of N.
Embodiment 5. The method according to embodiment 1 or 2, wherein the method further comprises:
   sending, by the terminal device, a second message to the network device, wherein the second message is used to indicate the largest value in the timing advances used when the terminal device measures the first reference signal.
Embodiment 6. The method according to embodiment 1, wherein the method further comprises:
   when the terminal device supports sending and/or receiving of the signal other than the first reference signal in the measurement process, and the terminal device determines not to use a beam sweeping manner in the measurement process, receiving, by the terminal device within the first time domain range, the first reference signal, and sending and/or receiving a first signal, wherein the first signal is a signal other than the first reference signal.
Embodiment 7. The method according to embodiment 1, wherein the method further comprises:
   receiving, by the terminal device, only the first reference signal within the first time domain range when the terminal device supports sending and/or receiving of the signal other than the first reference signal in the measurement process, and the terminal device determines to use a beam sweeping manner in the measurement process.
Embodiment 8. The method according to any one of claims 1 to 7, wherein the method further comprises:
   sending, by the terminal device, capability information of the terminal device to the network device, wherein the capability information is used to indicate whether the terminal device supports sending and/or receiving of the signal other than the first reference signal in the measurement process.
Embodiment 9. A communication method, comprising:
   determining, by a network device, whether a terminal device supports sending and/or receiving of a signal other than a first reference signal in a measurement process, wherein the first reference signal is used by the terminal device to perform measurement in the measurement process; and
   skipping, by the network device, sending the signal other than the first reference signal to the terminal device within a first time domain range when determining that the terminal device does not support sending and/or receiving of the signal other than the first reference signal in the measurement process, wherein the first time domain range comprises a first time domain symbol and a second time domain symbol, the first time domain symbol is a time domain symbol configured by the network device, the second time domain symbol comprises N time domain symbols before the first time domain symbol and/or N time domain symbols after the first time domain symbol, and N is a positive integer.
Embodiment 10. The method according to embodiment 9, wherein
   a value of N is a predefined value;
   the value of N is determined based on a subcarrier spacing of a serving cell of the terminal device;
   the value of N is determined based on a frequency range to which a frequency of the serving cell of the terminal device belongs;
   the value of N is determined based on a timing advance of the terminal device in the serving cell of the terminal device; or
   the value of N is determined based on a largest value in timing advances used when the terminal device measures the first reference signal.
Embodiment 11. The method according to embodiment 8 or 9, wherein the method further comprises:
   receiving, by the network device, a second message from the terminal device, wherein the second message is used to indicate the value of N.
Embodiment 12. The method according to embodiment 10 or 11, wherein the method further comprises:
   sending, by the network device, a first message to the terminal device, wherein the first message is used to indicate the value of N.
Embodiment 13. The method according to any one of claims 9 to 12, wherein the method further comprises:
   sending, by the network device, the first message to the terminal device, wherein the first message is used to indicate the largest value in the timing advances used when the terminal device measures the first reference signal.
Embodiment 14. The method according to embodiment 9, wherein the method further comprises:
   when the network device determines that the terminal device supports sending and/or receiving of the signal other than the first reference signal in the measurement process, and the network device determines that the terminal device does not use a beam sweeping manner in the measurement process, sending, by the network device within the first time domain range, the first reference signal to the terminal device, and receiving and/or sending a first signal to the terminal device, wherein the first signal is a signal other than the first reference signal.
Embodiment 15. The method according to embodiment 9, wherein the method further comprises:
   sending, by the network device, only the first reference signal within the first time domain range when the network device determines that the terminal device supports sending and/or receiving of the signal other than the first reference signal in the measurement process, and the network device determines that the terminal device uses a beam sweeping manner in the measurement process.
Embodiment 16. The method according to any one of claims 9 to 15, wherein the determining, by a network device, whether a terminal device supports sending and/or receiving of a signal other than a first reference signal in a measurement process comprises:
   receiving, by the network device, capability information of the terminal device from the terminal device; and
   determining, by the network device based on the capability information, whether the terminal device supports sending and/or receiving of the signal other than the first reference signal in the measurement process.
Embodiment 17. A communication method, comprising:
   receiving, by a terminal device, measurement configuration information from a network device, wherein the measurement configuration information is used to indicate the terminal device to measure a plurality of first reference signals; and
   measuring, by the terminal device, the plurality of first reference signals based on the measurement configuration information when the terminal device determines that a smallest value in differences between a plurality of cyclic shifts corresponding to the plurality of first reference signals is greater than or equal to M, wherein
   the plurality of first reference signals are first reference signals located on a same time domain symbol and corresponding to a same comb.
Embodiment 18. The method according to embodiment 17, wherein
   a value of M is a predefined value;
   the value of M is determined based on a maximum timing error that can be processed by the terminal device;
   the value of M is determined based on a frequency range to which a frequency of a serving cell of the terminal device belongs; or
   the value of M is determined based on a subcarrier spacing of the serving cell of the terminal device.
Embodiment 19. The method according to embodiment 17, wherein the method further comprises:
   receiving, by the terminal device, a first message from the network device, wherein the first message is used to indicate a value of M.
Embodiment 20. A communication method, comprising:
   determining, by a network device, measurement configuration information, wherein the measurement configuration information is used to indicate a terminal device to measure a plurality of first reference signals, a smallest value in differences between a plurality of cyclic shifts corresponding to the plurality of first reference signals configured by the network device is greater than or equal to M, and the plurality of first reference signals are first reference signals located on a same time domain symbol and corresponding to a same comb; and
   sending, by the network device, the measurement configuration information to the terminal device.
Embodiment 21. The method according to embodiment 20, wherein
   a value of M is a predefined value;
   the value of M is determined based on a maximum timing error that can be processed by the terminal device;
   the value of M is determined based on a frequency range to which a frequency of a serving cell of the terminal device belongs; or
   the value of M is determined based on a subcarrier spacing of the serving cell of the terminal device.
Embodiment 22. The method according to embodiment 20, wherein the method further comprises:
   sending, by the network device, a first message to the terminal device, wherein the first message is used to indicate a value of M.
Embodiment 23. A communication method, comprising:
   receiving, by a terminal device, measurement configuration information from a network device, wherein the measurement configuration information is used to indicate the terminal device to measure a plurality of first reference signals;
   determining, by the terminal device, that a case in which at least two of the plurality of first reference signals are located on a same time domain symbol and correspond to a same comb does not exist; and
   measuring, by the terminal device, the plurality of first reference signals based on the measurement configuration information.
Embodiment 24. The method according to embodiment 23, wherein
   the measurement configuration information is further used to indicate the terminal device to measure a plurality of second reference signals, wherein the plurality of second reference signals are located on a same time domain symbol and correspond to a same comb.
Embodiment 25. A communication method, comprising:
   determining, by a network device, measurement configuration information, wherein the measurement configuration information is used to indicate a terminal device to measure a plurality of first reference signals, and a case in which at least two of the plurality of first reference signals indicated by the measurement configuration information are located on a same time domain symbol and correspond to a same comb does not exist; and
   sending, by the network device, the measurement configuration information to the terminal device.
Embodiment 26. The method according to embodiment 25, wherein
   the measurement configuration information is further used to indicate the terminal device to measure a plurality of second reference signals, wherein the plurality of second reference signals are located on a same time domain symbol and correspond to a same comb.
Embodiment 27. A communication device, comprising a transceiver and a processor, wherein the transceiver is coupled to the processor, to perform the method according to any one of claims 1 to 8.
Embodiment 28. A communication device, comprising a transceiver and a processor, wherein the transceiver is coupled to the processor, to perform the method according to any one of claims 9 to 16.
Embodiment 29. A communication device, comprising a transceiver and a processor, wherein the transceiver is coupled to the processor, to perform the method according to any one of claims 17 to 19.
Embodiment 30. A communication device, comprising a transceiver and a processor, wherein the transceiver is coupled to the processor, to perform the method according to any one of claims 20 to 22.
Embodiment 31. A communication device, comprising a transceiver and a processor, wherein the transceiver is coupled to the processor, to perform the method according to embodiment 23 or 24.
Embodiment 32. A communication device, comprising a transceiver and a processor, wherein the transceiver is coupled to the processor, to perform the method according to embodiment 25 or 26.

The foregoing descriptions are merely specific implementations of this application, but are not intended to limit the protection scope of the embodiments of this application. Any variation or replacement readily figured out by a person skilled in the art within the technical scope disclosed in the embodiments of this application shall fall within the protection scope of this application. Therefore, the protection scope of the embodiments of this application shall be subject to the protection scope of the claims.

## Claims

1. A communication method, comprising:
receiving measurement configuration information from a network device, wherein the measurement configuration information is used to indicate a terminal device to measure a plurality of first reference signals; and
measuring the plurality of first reference signals based on the measurement configuration information when the terminal device determines that a smallest value in differences between a plurality of cyclic shifts corresponding to the plurality of first reference signals is greater than or equal to M, wherein
the plurality of first reference signals are first reference signals located on a same time domain symbol and corresponding to a same comb.

2. The method according to claim 1, wherein
a value of M is a predefined value;
the value of M is determined based on a maximum timing error that can be processed by the terminal device;
the value of M is determined based on a frequency range to which a frequency of a serving cell of the terminal device belongs; or
the value of M is determined based on a subcarrier spacing of the serving cell of the terminal device.

3. The method according to claim 2, wherein
the value of M is a predefined value, the value of M is a value obtained by dividing a configurable maximum quantity of cyclic shifts by 2, the configurable maximum quantity of cyclic shifts is related to a comb.

4. The method according to claim 3, wherein
comb=2, the configurable maximum quantity of cyclic shifts is 8;
comb=4, the configurable maximum quantity of cyclic shifts is 12.

5. The method according to claim 3 or 4, wherein
comb=2, M=4;
comb=4, M=6.

6. A communication method, comprising:
determining measurement configuration information, wherein the measurement configuration information is used to indicate a terminal device to measure a plurality of first reference signals, a smallest value in differences between a plurality of cyclic shifts corresponding to the plurality of first reference signals configured by a network device is greater than or equal to M, and the plurality of first reference signals are first reference signals located on a same time domain symbol and corresponding to a same comb; and
sending the measurement configuration information to the terminal device.

7. The method according to claim 6, wherein
a value of M is a predefined value;
the value of M is determined based on a maximum timing error that can be processed by the terminal device;
the value of M is determined based on a frequency range to which a frequency of a serving cell of the terminal device belongs; or
the value of M is determined based on a subcarrier spacing of the serving cell of the terminal device.

8. The method according to claim 7, wherein
the value of M is a predefined value, the value of M is a value obtained by dividing a configurable maximum quantity of cyclic shifts by 2, the configurable maximum quantity of cyclic shifts is related to a comb.

9. The method according to claim 8, wherein
comb=2, the configurable maximum quantity of cyclic shifts is 8;
comb=4, the configurable maximum quantity of cyclic shifts is 12.

10. The method according to claim 8 or 9, wherein
comb=2, M=4;
comb=4, M=6.

11. The method according to any one of claims 6 to 10, wherein
the plurality of first reference signals are the plurality of sounding reference signal (SRS).

12. A communication apparatus, configured to perform the method as claimed in any one of claims 1 to 5.

13. A communication apparatus, configured to perform the method as claimed in any one of claims 6 to 11.

14. A computer-readable storage medium comprising instructions which, when executed by a computer, cause the computer to carry out the method according to any one of claims 1-5, or any one of claims 6-11.
